# FASCICULE DE BREVET EUROPEEN

(11) **EP 3 661 836 B1**
(45) Date de publication et mention de la délivrance du brevet: **14.07.2021**
(21) Numéro de dépôt: 18748908.3
(22) Date de dépôt: 31.07.2018
(51) Int. Cl.: B62H 5/00, B62H 5/06

(54) **DISPOSITIF DE VERROUILLAGE D'UN CYCLE, CYCLE COMPRENANT UN TEL DISPOSITIF, SYSTÈME COMPRENANT UN TEL CYCLE**
VORRICHTUNG ZUM VERRIEGELN EINES ZYKLUS, ZYKLUS MIT EINER SOLCHEN VORRICHTUNG, SYSTEM MIT EINEM SOLCHEN ZYKLUS
DEVICE FOR LOCKING A CYCLE, CYCLE COMPRISING SUCH A DEVICE, SYSTEM COMPRISING SUCH A CYCLE

(30) Priorité: 01.08.2017 FR 1757387
(43) Date de publication de la demande: 10.06.2020
(73) Titulaire: Smoove, 34090 Montpellier (FR)
(72) Inventeur: MERCAT, Denis, 69110 Sainte Foy les Lyon (FR); PRAQUIN, Gaël, 69126 Brindas (FR)
(74) Mandataire: Touroude, Magali Linda
(86) Numéro de dépôt international: PCT/EP2018/070695
(87) Numéro de publication internationale: WO 2019/025425

(56) Documents cités:
- WO-A1-2010/058127
- DE-B3-102008 009 012

## Description

La présente invention concerne un dispositif de verrouillage, pour verrouiller un cycle à une borne de stockage, un cycle, comprenant un tel dispositif de verrouillage, ainsi qu'un système comprenant au moins un tel cycle et au moins une telle borne de stockage.

L'invention se rapporte au domaine des moyens de verrouillage de cycles à des structures fixes, notamment en prévention d'actes de vol, de dégradation ou de vandalisme. L'invention concerne en particulier des cycles stockés sur l'espace public, par exemple en ville, et mis à disposition d'un public autorisé, par exemple selon une procédure d'abonnement payante ou gratuite à un service de mise à disposition de ces cycles.

Document DE 10 2008 009012 B3 montre le préambule de la revendication 1.

WO 2010/058127 A1 décrit un système de stockage et de verrouillage de cycles, qui comprend plusieurs cycles et des postes de stockage et de verrouillage associés. Chacun des postes de stockage est constitué par deux bras fixés au sol et s'étendant vers le haut, pour former entre eux un espace dans lequel la roue avant du cycle est destinée à être introduite lors de la mise en place du cycle. Chaque cycle comporte deux saillies latérales coulissant latéralement, prévues pour coopérer avec deux logements en creux prévus dans les bras de chaque poste de stockage.

Chaque cycle comprend également une pièce rotative de manœuvre des saillies, à laquelle les saillies sont reliées cinématiquement respectivement par deux biellettes. La pièce rotative de manœuvre est commandée par une tige de commande mue par un micromoteur, de façon à commander le coulissage des saillies entre une position rétractée et une position en saillie. En position de saillie, il est impossible de mouvoir les saillies vers leur position rétractée par action sur les saillies, par effet de genouillère obtenu à l'aide des biellettes et de la pièce rotative de manœuvre. Seul le moteur peut faire passer les saillies de leur position en saillie à leur position rétractée, par action sur la pièce rotative de manœuvre. Par conséquent, la position en saillie est sécurisée.

Généralement, dans le cas de cycles mis à disposition d'un public autorisé, il est prévu que le moteur soit automatiquement actionné lorsque le cycle détecte qu'il a été positionné dans le poste de stockage, afin de verrouiller le cycle dans le poste. Cependant, il s'avère que le micromoteur, du fait de sa puissance limitée par l'encombrement et l'énergie disponible, est difficilement capable de mouvoir les saillies d'une position à l'autre en un temps inférieur à 0,5 s (secondes). A cela est susceptible de s'ajouter un temps supplémentaire de télécommunication entre le cycle, le poste de stockage et éventuellement un serveur distant, afin de déterminer si le cycle est autorisé ou non à être verrouillé sur ce poste particulier. Pour une personne mal intentionnée, un tel temps de verrouillage peut être suffisant pour pouvoir retirer le cycle du poste de stockage juste avant verrouillage : le cycle se retrouve alors hors du poste de stockage, avec les saillies verrouillées en position de saillie, le poste de stockage étant susceptible de croire, à tort, que le cycle a été correctement verrouillé.

Par ailleurs, dans le cas où le cycle a été mal positionné, ou positionné de travers, dans le poste de stockage et que la procédure de verrouillage par le micromoteur est engagée, les saillies peuvent se trouver dans une situation où ils coopèrent mal avec les orifices du poste de stockage malgré les efforts du micromoteur, lequel est susceptible de caler, de sorte que le cycle n'est pas correctement verrouillé au poste de stockage. Cette situation peut également être obtenue lorsque le cycle est engagé trop violemment dans le poste de stockage, de sorte que le cycle rebondit et adopte un mauvais positionnement empêchant un verrouillage adéquat.

L'invention vise à pallier à ces inconvénients en proposant un nouveau dispositif de verrouillage, pour verrouiller un cycle à une borne de stockage de façon particulièrement fiable, en dépit de toute éventuelle utilisation incorrecte du dispositif par un utilisateur.

L'invention a pour objet un dispositif de verrouillage pour verrouiller un cycle à une borne de stockage du cycle, le dispositif de verrouillage pouvant être engagé dans la borne de stockage et le dispositif de verrouillage pouvant être désengagé de la borne de stockage, le dispositif de verrouillage comprenant un support, qui est conçu pour être intégré à une partie du cycle, et au moins un pêne, qui est mobile par rapport au support.

Selon l'invention, le dispositif de verrouillage est configuré pour évoluer entre : une configuration d'engagement, dans laquelle le pêne est mobile entre une position escamotée, qui est prévue pour autoriser l'engagement et le désengagement du dispositif de verrouillage, et une première position de saillie, qui est prévue pour interdire le désengagement du dispositif de verrouillage lorsque celui-ci est engagé, le pêne étant rappelé dans la première position de saillie par un organe de rappel du dispositif de verrouillage lorsque le dispositif de verrouillage est en configuration d'engagement ; une configuration de verrouillage : dans laquelle passe le dispositif de verrouillage, à partir de la configuration d'engagement, par actionnement d'un organe de commande du dispositif de verrouillage, et dans laquelle le pêne est bloqué dans une deuxième position de saillie, qui peut optionnellement être confondue avec la première position de saillie, et qui interdit le désengagement du dispositif de verrouillage lorsque celui-ci est engagé ; et une configuration de désengagement : dans laquelle passe le dispositif de verrouillage par actionnement de l'organe de commande à partir de la configuration de verrouillage, dans laquelle le pêne est mobile entre d'une part une position intermédiaire, laquelle est définie entre la position escamotée et les positions de saillie, et d'autre part la position escamotée, et dans laquelle l'organe de rappel met le dispositif de verrouillage en configuration d'engagement lorsque le pêne est amené en position escamotée.

Grâce à l'invention, lorsque le dispositif de verrouillage est en configuration d'engagement, on peut concevoir une borne de stockage configurée pour :
- sous l'effet d'un engagement du dispositif de verrouillage dans la borne de stockage par un utilisateur, entraîner mécaniquement le pêne depuis la première position de saillie jusqu'à la position escamotée à l'encontre de l'organe de rappel, par exemple à l'aide d'une rampe d'escamotage prévue sur la borne de stockage, puis
- lorsque la manœuvre d'engagement est poursuivie, autoriser le pêne à revenir en première position de saillie, par exemple par accommodation du pêne dans une gâche prévue sur la borne de stockage à la suite de la rampe d'escamotage, de préférence sous l'effet de l'organe de rappel, ce qui a pour effet de verrouiller le dispositif de verrouillage à la station de stockage, le dispositif étant mécaniquement retenu par le pêne engagé dans la gâche.

Pour que le pêne soit retenu dans la gâche, on prévoit que la conformation réciproque du pêne et de la gâche ne permet pas au pêne d'être ramené dans sa position escamotée lorsque l'on tente de désengager le dispositif de verrouillage de la borne de stockage, par exemple en prévoyant que le pêne et la gâche soient conformés réciproquement de façon relativement abrupte.

Lorsque le dispositif de verrouillage est ainsi engagé et le pêne est en première position de saillie, il se retrouve alors instantanément verrouillé à la borne de stockage. Avantageusement, ce premier verrouillage ne peut mécaniquement être effectué que si le positionnement du dispositif de verrouillage dans la borne de stockage est correct, puisque l'organe de rappel ne peut repousser le pêne vers sa première position de saillie que si le pêne est correctement positionné dans la gâche. Il n'y a donc pas ou peu de temps d'attente entre le moment où le dispositif de verrouillage est engagé dans la borne de stockage et le moment où il y est verrouillé.

Afin de renforcer ce premier verrouillage, l'organe de commande peut être actionné pour faire passer le dispositif de verrouillage en configuration de verrouillage, ce qui bloque le pêne en deuxième position de saillie. Le verrouillage est alors particulièrement sûr, dans la mesure où le pêne ne peut alors pas être mu en position escamotée pour désengager le dispositif de verrouillage de la borne de stockage.

Pour que le dispositif de verrouillage puisse être désengagé de la borne de stockage, l'organe de commande doit être actionné afin de faire passer le dispositif de verrouillage en configuration de désengagement. Le pêne est alors amené en position intermédiaire, de sorte que, lors d'une mise en mouvement du dispositif de verrouillage par l'utilisateur pour son désengagement de la borne de stockage, le pêne est mécaniquement repoussé par la gâche, jusqu'à la position escamotée. Pour cela, le pêne et la gâche présentent avantageusement une conformation réciproque adaptée. Le dispositif de verrouillage est donc librement désengagé de la borne de stockage par l'utilisateur. Au cours de ce désengagement, la mise en position escamotée du pêne entraîne alors mécaniquement et systématiquement le dispositif de verrouillage à passer à nouveau en configuration d'engagement. Alors, le cycle est à nouveau prêt à être engagé et verrouillé dans une borne de stockage.

D'après l'invention:
- le dispositif de verrouillage comprend : un organe d'actionnement, qui est mobile par rapport au support, et est configuré pour être soumis à un effort de rappel ou un couple de rappel par l'organe de rappel et pour être actionné par l'organe de commande ; une transmission mécanique, qui lie mécaniquement en position le pêne et l'organe d'actionnement, et qui est configurée pour évoluer entre : une configuration réversible, adoptée en configuration d'engagement et en configuration de désengagement, dans laquelle la mobilité du pêne est autorisée entre la position escamotée et la première position de saillie par réversibilité de la transmission mécanique, sous l'action d'un effort exercé sur le pêne, et une configuration irréversible, adoptée en configuration de verrouillage, dans laquelle la mobilité du pêne est limitée à la deuxième position de saillie par irréversibilité de la transmission mécanique, en dépit de l'exercice d'un effort sur le pêne.
   D'autres caractéristiques optionnelles et avantageuses de l'invention sont définies dans ce qui suit:
- le pêne est mobile en coulissement le long d'un axe de pêne fixe par rapport au support, l'organe d'actionnement est mobile en rotation autour d'un axe principal fixe par rapport au support et perpendiculaire par rapport à l'axe de pêne, la rotation pouvant être effectuée selon un sens direct et selon un sens indirect, l'organe de rappel appliquant un couple de rappel sur l'organe d'actionnement, par rapport au support, en rotation dans le sens direct, la transmission mécanique liant mécaniquement le coulissement du pêne à la rotation de l'organe d'actionnement de sorte que l'organe d'actionnement peut être orienté, par rapport au support et autour de l'axe principal : en configuration réversible, selon les orientations suivantes successives dans le sens direct : une orientation d'escamotage, qui correspond à la position escamotée du pêne, une orientation intermédiaire, qui correspond à la position intermédiaire du pêne, et une première orientation de saillie, qui correspond à la première position de saillie du pêne ; et en configuration irréversible, selon une deuxième orientation de saillie successive à la première orientation de saillie dans le sens direct, la deuxième orientation de saillie correspondant à la deuxième position de saillie du pêne ; l'organe de commande est actionnable en rotation par rapport au support autour de l'axe principal entre : une orientation de déblocage, pour mettre le dispositif de verrouillage en configuration de désengagement à partir de la configuration de verrouillage, et une orientation de blocage, par rotation dans le sens direct depuis l'orientation de déblocage, pour mettre le dispositif de verrouillage en configuration de verrouillage à partir de la configuration d'engagement
- l'organe de commande comprend une butée radiale directe qui borne la rotation de l'organe d'actionnement dans le sens indirect autour de l'axe principal par rapport à l'organe de commande, de sorte que, lorsque l'organe d'actionnement est en butée contre la butée radiale directe, l'organe d'actionnement est : en orientation d'escamotage, alors que l'organe de commande est en orientation de déblocage, et en deuxième orientation de saillie, alors que l'organe de commande est en orientation de blocage.
- l'organe de commande comprend une première butée radiale indirecte qui borne la rotation de l'organe d'actionnement dans le sens direct autour de l'axe principal par rapport à l'organe de commande, de sorte que : l'organe d'actionnement est en première orientation de saillie lorsque l'organe d'actionnement est en butée contre la première butée radiale indirecte, alors que l'organe de commande est en orientation de déblocage ; et si l'organe de commande est mis en rotation dans le sens direct depuis l'orientation de déblocage jusqu'à l'orientation de blocage, une mise en rotation de l'organe d'actionnement dans le sens direct par l'organe de rappel est autorisée, l'organe d'actionnement étant alors entraîné jusqu'à la deuxième orientation de saillie par l'organe de rappel, ce qui fait passer le dispositif de verrouillage en configuration de verrouillage.
- l'organe de commande comprend une deuxième butée radiale indirecte ; et le dispositif de verrouillage comprend un organe mobile, monté sur l'organe d'actionnement et configuré pour basculer entre : une configuration déclenchée, dans laquelle l'organe mobile ne s'oppose pas à la rotation de l'organe de commande par rapport à l'organe d'actionnement, et une configuration enclenchée, dans laquelle la deuxième butée radiale indirecte borne la rotation de l'organe d'actionnement dans le sens direct autour de l'axe principal par rapport à l'organe de commande, par l'intermédiaire de l'organe mobile, de sorte que, si l'organe de commande est entraîné en rotation depuis son orientation de blocage jusqu'à son orientation de déblocage, l'organe de commande entraîne l'organe d'actionnement en rotation dans le sens indirect par rapport au support, par mise en butée de l'organe d'actionnement contre la deuxième butée radiale indirecte, depuis la deuxième orientation de saillie jusqu'à l'orientation intermédiaire, afin de faire passer le dispositif de verrouillage de la configuration de verrouillage à la configuration de désengagement.
- le support comprend une butée d'enclenchement, qui est configurée pour faire basculer l'organe mobile en configuration enclenchée, alors qu'il était en configuration déclenchée, lorsque l'organe d'actionnement passe de la première orientation de saillie à la deuxième orientation de saillie.
- l'organe d'actionnement comprend une partie primaire, qui est liée directement à la transmission mécanique, et une partie secondaire sur laquelle l'organe de rappel exerce le couple de rappel ; la partie secondaire est configurée pour entrer en butée contre la deuxième butée radiale indirecte de l'organe de commande, lorsque l'organe mobile est en configuration enclenchée ; et la partie primaire est rotative par rapport à la partie secondaire autour de l'axe principal, entre : une orientation d'autorisation, dans laquelle l'organe mobile est autorisé par la partie primaire et par la partie secondaire à adopter la configuration d'enclenchement et la configuration de déclenchement, et une orientation de basculement, dans laquelle la partie primaire a effectué une rotation dans le sens indirect par rapport à l'orientation d'autorisation, de façon à maintenir l'organe mobile en configuration de déclenchement, de sorte que, en configuration de désengagement, un entraînement du pêne depuis la position intermédiaire jusqu'à la position escamotée fait passer la partie primaire de l'orientation d'autorisation à l'orientation de basculement.
- l'organe de rappel est un ressort de torsion.
- le dispositif de verrouillage comprend en outre un système de pilotage comprenant : un actionneur de commande configuré pour actionner l'organe de commande ; au moins un récepteur d'autorisations ; et un automate de pilotage de l'organe de commande par l'intermédiaire de l'actionneur de commande, le système de pilotage étant configuré pour actionner l'organe de commande de façon à : mettre le dispositif de verrouillage en configuration de verrouillage, depuis la configuration d'engagement, lorsque le récepteur d'autorisations reçoit une autorisation de verrouillage ; et mettre le dispositif de verrouillage en configuration de désengagement, depuis la configuration de verrouillage, lorsque le récepteur d'autorisations reçoit une autorisation de désengagement.
- dans la configuration de verrouillage, le pêne est bloqué dans la deuxième position de saillie, de sorte que ledit pêne ne peut pas être mu de façon significative par l'exercice d'un effort sur ledit pêne.

L'invention a également pour objet un cycle, comprenant un dispositif de verrouillage conforme à ce qui précède, lequel est intégré à une partie du cycle, de préférence un cadre ou une fourche avant du cycle.

De préférence, le support comprend un bouchon dans lequel sont logés l'organe de rappel et la partie secondaire ; le dispositif de verrouillage comprend un sous-ensemble démontable comprenant le bouchon, l'organe de rappel et la partie secondaire ; et le sous-ensemble démontable peut être démonté du cycle sans démonter la partie primaire et sans démonter l'organe de commande.

L'invention a également pour objet un système comprenant au moins un cycle conforme à ce qui précède, ainsi qu'au moins une borne de stockage dans laquelle le dispositif de verrouillage du cycle peut être engagé et de laquelle le dispositif de verrouillage peut être désengagé.

De préférence, la borne de stockage comprend : une rampe d'escamotage, qui est configurée pour, alors que le dispositif de verrouillage est en configuration d'engagement, faire passer le pêne depuis la première position de saillie jusqu'à la position escamotée à l'encontre de l'organe de rappel, sous l'action d'un engagement du dispositif de verrouillage dans la borne de stockage, et une gâche, qui est configurée pour être atteinte par le pêne, alors qu'il a été mis en position escamotée à l'aide de la première rampe d'escamotage, le positionnement du pêne au sein de la gâche autorisant le pêne à être mis en première position de saillie pour ainsi verrouiller le dispositif de verrouillage à la borne de stockage.

L'invention sera mieux comprise à la lecture de la description qui suit, donnée uniquement à titre d'exemple non limitatif et faite en se référant aux dessins annexés dans lesquels :
- La figure 1 est une vue en perspective d'un système conforme à l'invention, comprenant trois cycles et six bornes de stockage ;
- La figure 2 est une vue en perspective d'une fourche de direction de l'un des cycles de la figure 1 ;
- Les figures 3 et 4 illustrent un détail de la figure 2 respectivement selon une vue en perspective à plus grande échelle et selon une vue de face, pour montrer un dispositif de verrouillage conforme à l'invention, équipant le cycle de la figure 2 ;
- La figure 5 est une vue éclatée du dispositif de verrouillage de la figure 2 ;
- Les figures 6 à 9 sont des coupes, vues de dessus, selon le trait VI-VI de la figure 4, illustrant le dispositif de verrouillage dans différentes configurations ;
- Les figures 10 à 12 sont des vues en perspective, sous deux angles différents, de différents organes appartenant au dispositif de verrouillage des figures précédentes ;
- Les figures 13 à 18 sont des coupes, vues de dessous, selon le trait XIV-XIV de la figure 4, illustrant le dispositif de verrouillage dans différentes configurations ; et
- Les figures 19 à 22 sont des coupes partielles du système de la figure 1, selon un plan XX, le système étant représenté dans trois configurations différentes sur les figures 19 à 22.

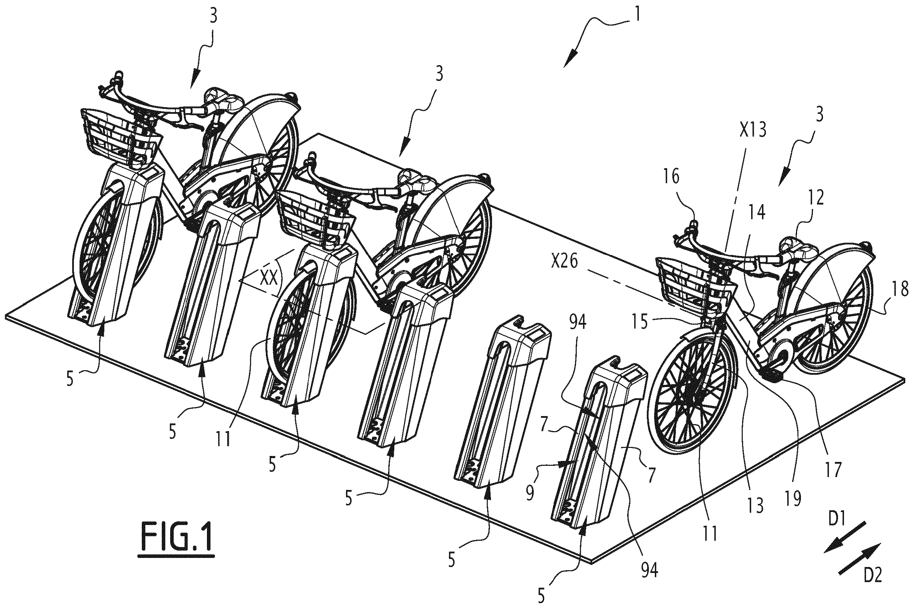

La figure 1 illustre un système 1, dans comprenant trois cycles 3 et six bornes de stockage 5 fixées au sol et alignées pour former une station de stockage. Ce type de borne 5 est habituellement disposé dans l'espace public. Chaque cycle 3 est conçu pour être engagé et verrouillé dans chacune des bornes 5, comme les deux cycles représentés à gauche sur la figure 1, et pour être déverrouillé et désengagé de chacune des bornes 5, comme le cycle 3 représenté à droite de la figure 1.

Par « cycle », on entend de préférence un véhicule de type « bicyclette », qui peut être une bicyclette configurée pour une propulsion par la seule force de l'utilisateur, notamment par pédalage. Le cycle 3 est apte à transporter au moins une personne, de préférence adulte. Pour cela, le cycle 3 comprend de préférence une assise, par exemple une selle 12 ou un siège. Le cycle est préférentiellement doté d'un mécanisme de transformation d'un effort, produit par l'utilisateur, en rotation des roues pour la propulsion du cycle, tel qu'un pédalier 17 associé à une transmission par chaîne, transmettant l'effort de pédalage à au moins l'une des roues, notamment la roue arrière 18. Alternativement, on pourrait prévoir que le cycle est dénué d'un tel mécanisme de transmission, et doive simplement être poussé. Le cycle 3 est optionnellement doté d'une motorisation embarquée, par exemple électrique ou thermique, pour assister ou assurer cette propulsion. Dans le cas d'exemple, le cycle comprend un système d'assistance au pédalage, comprenant un moteur électrique alimenté par une batterie embarquée 19. « Cycle » peut également désigner tout type de véhicule terrestre à deux-roues, ou doté d'un nombre de roues différent de deux, par exemple une seule roue, trois roues, ou quatre roues.

Ce véhicule est préférentiellement suffisamment léger pour pouvoir être manipulé et propulsé par un seul utilisateur, même lorsque l'éventuelle motorisation embarquée n'assure pas la propulsion. Le cycle peut également être prévu pour transporter plusieurs utilisateurs, par exemple deux, trois ou quatre, tout en restant suffisamment léger pour être manipulé et éventuellement propulsé par un seul d'entre eux. Le nombre de roues, ainsi que de moyens de transmission et de propulsion peuvent alors être adapté en conséquence.

On prévoit généralement des bornes 5, éventuellement regroupées en stations, en différents lieux de l'espace public d'une agglomération, afin de permettre une mise à disposition automatique des cycles 3 à des utilisateurs habilités. Néanmoins, le verrouillage est nécessaire pour interdire à une personne non habilité de déverrouiller et désengager l'un des cycles 3.

Dans le présent exemple, chaque borne 5 comprend deux montants parallèles 7 fixés au sol et dirigés vers le haut, délimitant entre eux une ouverture 9, préférentiellement traversante pour accueillir une roue avant 11 du cycle 3. Les montants 7 pourraient alternativement être fixés à un mur ou tout autre support. Il pourrait être prévu que l'ouverture 9 accueille, au lieu de la roue avant 11, une roue arrière 18, ou toute autre partie du cycle 3 telle qu'une partie de son cadre 14, notamment en fonction de la forme de réalisation du cycle 3 et de la borne 5.

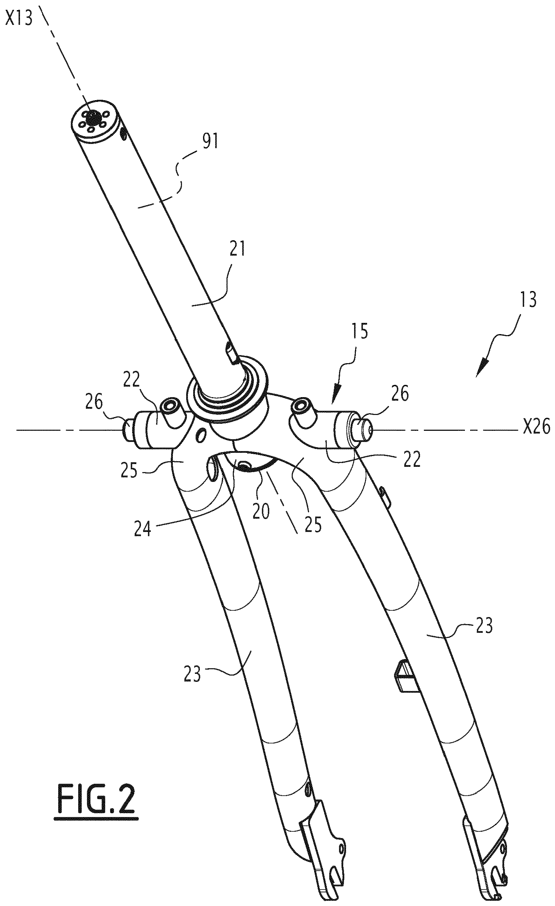

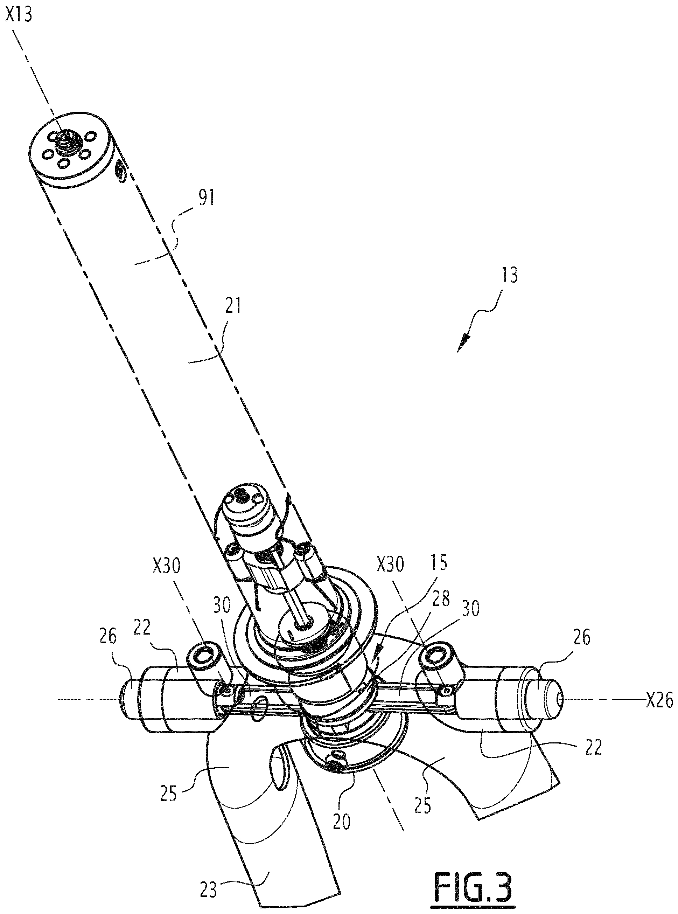

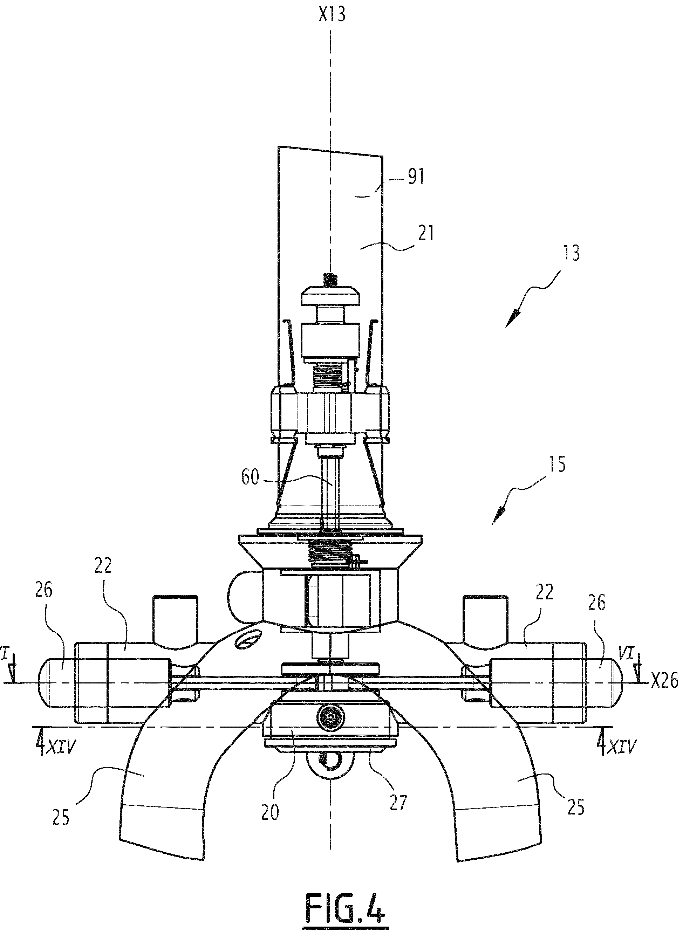

Pour pouvoir être ainsi engagé et verrouillé dans une borne 5, ainsi que déverrouillé et désengagé d'une borne 5, chaque cycle 3 est doté d'un dispositif de verrouillage 15, qui est lui-même engagé dans, et désengagé de, cette borne 5 lorsque l'est le cycle 3. Dans le présent exemple, le dispositif 15 est prévu au sein de la fourche avant 13 du cycle 3, portant la roue avant 11. Cette fourche 13 permet avantageusement de diriger le cycle par l'intermédiaire de la roue avant 11, en ce que la fourche 13 est pivotante autour d'un axe de fourche X13 par rapport au cadre 14, sous l'action d'un guidon 16 solidaire de cette fourche 13 et contrôlé par l'utilisateur au cours de la conduite du cycle 3. Les figures 2 à 4 représentent cette fourche 13 et le dispositif 15 à plus grande échelle, les figures 3 et 4 laissant transparaître le dispositif 15 au travers des éléments de la fourche 13.

La fourche 13 comprend une tige de fourche 21, tubulaire et coaxiale avec l'axe X13, par l'intermédiaire de laquelle la fourche 13 est liée de façon pivotante au cadre 14. La fourche 13 comprend également deux bras 23 parallèles, qui s'étendant dans une direction similaire à l'axe X13 à partir d'une zone située à proximité d'une extrémité inférieure 24 de la tige 21. Les bras 23 sont distants l'un de l'autre de façon à accueillir et supporter entre eux la roue avant 11. Les bras 23 forment une tête de fourche à proximité de l'extrémité 24, au niveau de laquelle tête ils présentent chacun un coude 25 de connexion à la tige 21. L'extrémité 24 est saillante dans l'espace séparant les bras 23, entre les deux coudes 25.

Le dispositif 15 comprend un support qui est intégré à une partie du cycle 3. Dans le cas d'exemple, le support est constitué par une partie de la fourche 13. Plus précisément, une partie du support est formée d'un seul tenant avec des éléments de la fourche 13 : le support du dispositif 15 comprend ainsi deux douilles 22 formées d'un seul tenant avec les coudes 25, et comprend une partie de la tige 21. Une autre partie du support est intégré à la fourche 13 par fixation : le support du dispositif 15 comprend un bouchon 20, qui est fixement rapporté sur l'extrémité 24 de la tige 21. Quel que soit le mode d'intégration au cycle 3, on considère que le support constitue le bâti du dispositif 15, ses différentes parties étant fixes les unes par rapport aux autres et servant de référence aux considérations cinématiques en jeu dans le dispositif 15. Dans le cas d'espèce, le support est fixe par rapport à la fourche 13. Dans d'autre cas, le support est fixe par rapport au cadre ou à tout autre élément du cycle 3 auquel le support est intégré.

Le dispositif 15 comprend également deux pênes 26, qui se présentent chacun sous la forme d'un doigt, préférentiellement de forme générale cylindrique à base circulaire. Les pênes 26 coulissent par rapport à la fourche 13, le long d'un axe de pêne X26 commun et fixe par rapport à la fourche 13. L'axe X26 est perpendiculaire et sécant avec l'axe X13. Toutefois, l'axe X26 pourrait ne pas être sécant, voire ne pas être perpendiculaire à l'axe X13. En particulier, chaque pêne 26 est supporté et coulisse au sein de l'une des deux douilles 22, de forme tubulaire à base circulaire, qui sont également positionnées coaxialement avec l'axe X26. Ces pênes 26 constituent un moyen mécanique pour verrouiller le cycle 3 dans la borne 5, par coopération avec des moyens appartenant à la borne 5, comme expliqué plus bas.

En variante, on prévoit un nombre de pênes différent de deux, par exemple seulement un pêne, ou quatre pênes.

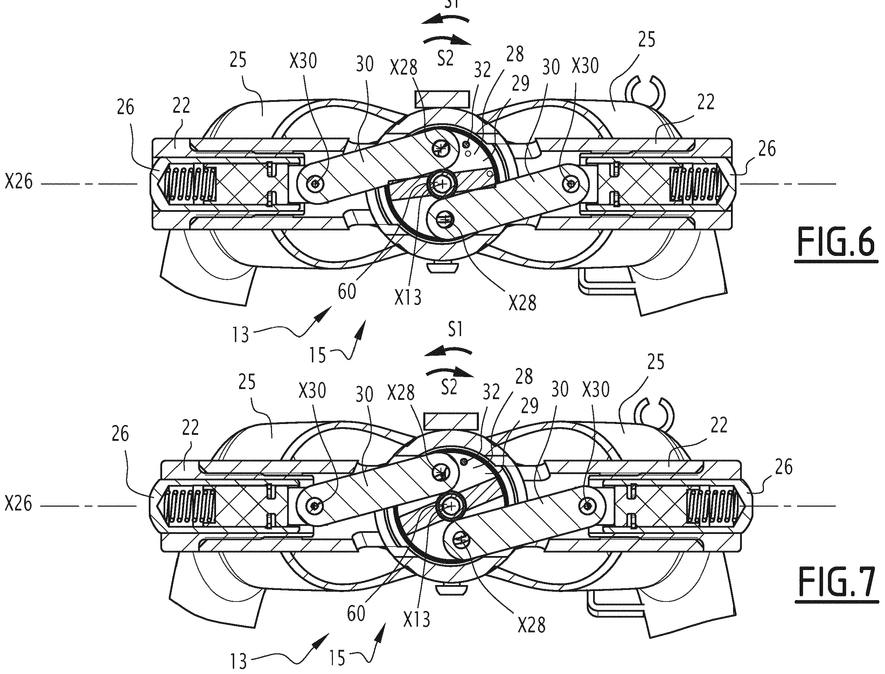

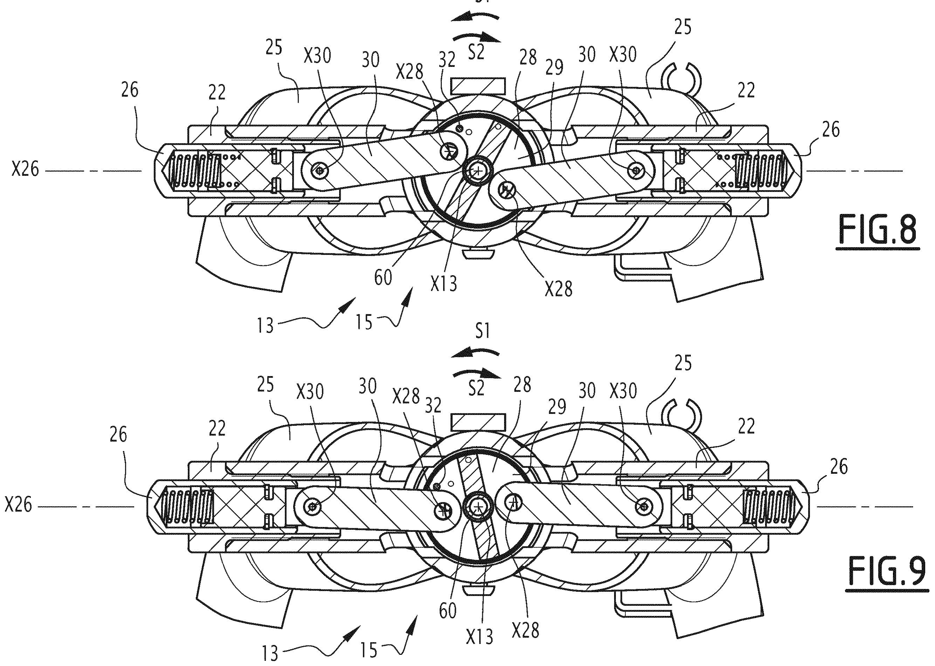

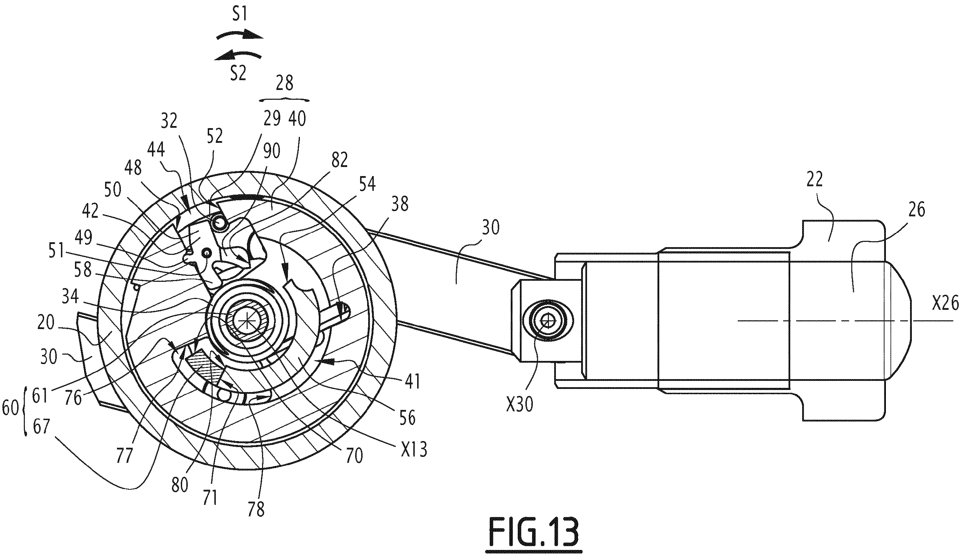

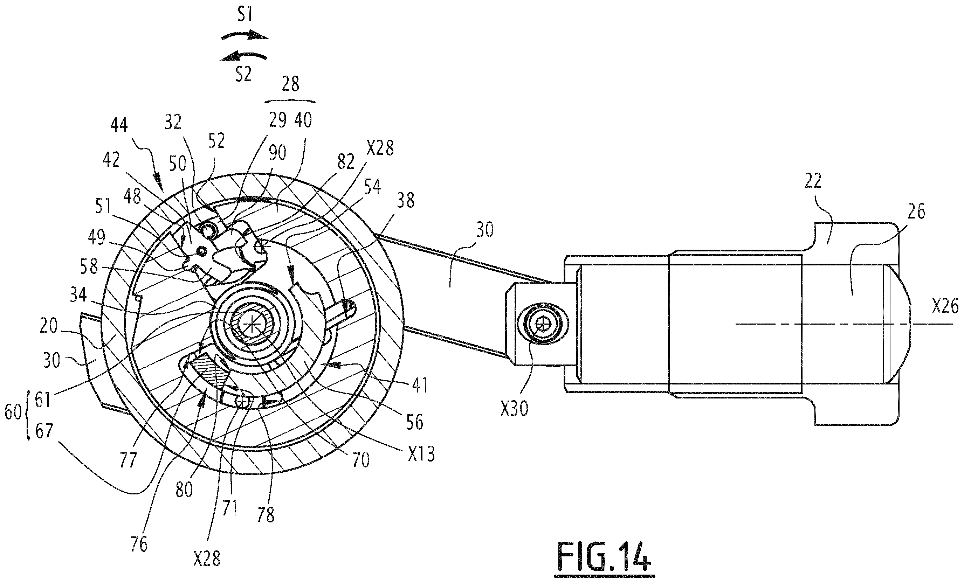

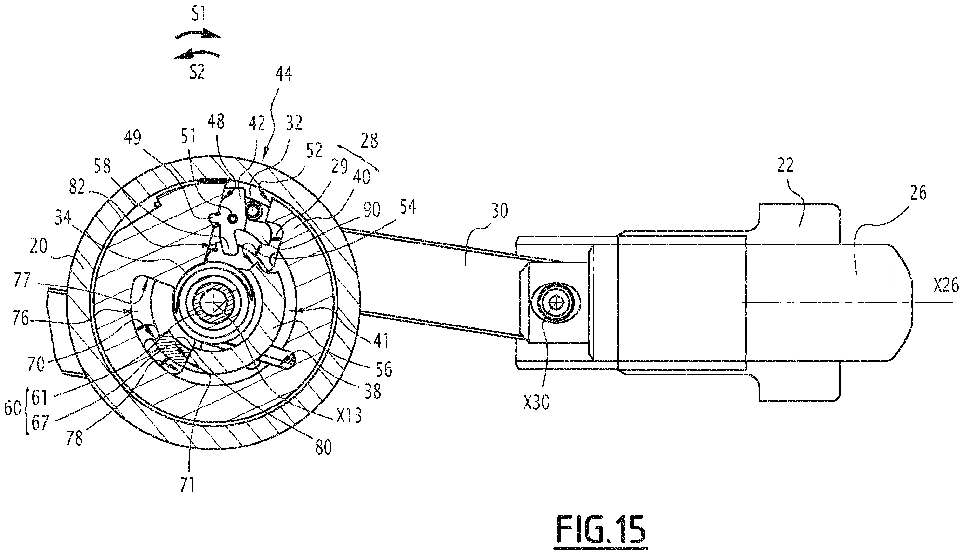

De façon antagoniste, synchronisée et symétrique, chaque pêne est coulissant selon les différentes positions suivantes :
- tel qu'illustré aux figures 6 et 14, une position escamotée, dans laquelle chaque pêne 26 est rétracté au sein de sa douille 22, dans laquelle les pênes 26 sont le plus rapprochés l'un de l'autre, la position escamotée autorisant le libre engagement et désengagement du cycle 3 avec la borne 5 ;
- tel qu'illustré aux figures 8 et 15, une première position de saillie, dans laquelle les pênes 26 sont saillants par rapport à leur douille 22 respective, et sont plus écartés l'un de l'autre qu'en position escamotée, la première position de saillie interdisant le désengagement du cycle 3 de la borne 5, lorsque le cycle 3 y est engagé ;
- tel qu'illustré aux figure 9, 17 et 18, une deuxième position de saillie, dans laquelle les pênes 26 sont encore plus saillants par rapport à leur douille 22 respective que dans la première position de saillie, la deuxième position de saillie interdisant également le désengagement du cycle 3 de la borne 5, lorsque le cycle 3 y est engagé ;
- tel qu'illustré aux figures 7 et 13, une position intermédiaire, dans laquelle chaque pêne 26 est disposé entre la position escamotée et la première position de saillie.

Dans le présent exemple, les deux positions de saillie sont distinctes. En variante, la deuxième position de saillie peut être confondue avec la première, ou les pênes 26 peuvent être positionnés, lorsqu'en deuxième position de saillie, entre la position intermédiaire et la première position de saillie. Cela dépend du type et de la conception de des transmissions mécaniques commandant le mouvement des pênes 26.

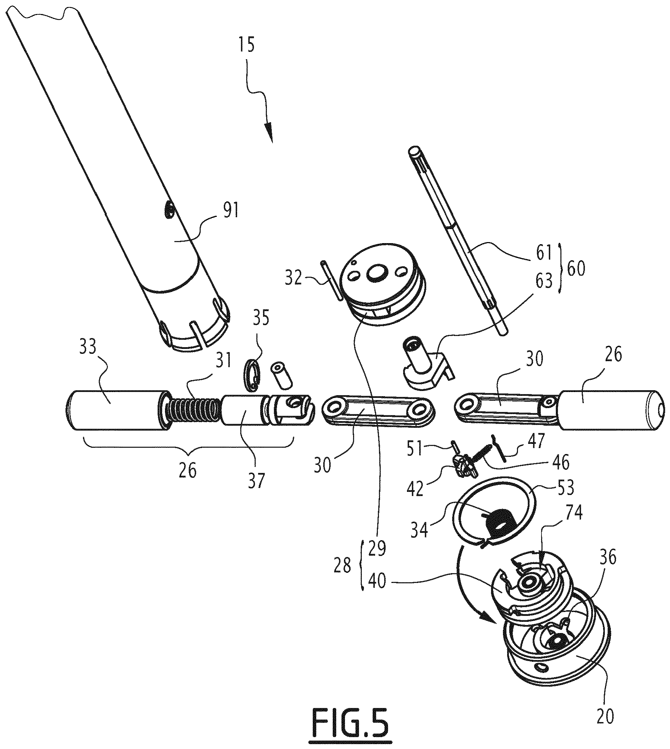

De manière avantageuse illustrée aux figures 5 à 9, chaque pêne 26 comprend un ressort de précontrainte 31, un capuchon 33, un piston 37 et une bague de fixation axiale 35. Le capuchon 33 est rapporté sur le piston 37 en le recouvrant, de façon à coulisser et à être libre en rotation par rapport au piston le long de l'axe X26. Le ressort 31 est interposé entre le capuchon 33 et le piston 37, alors que la bague 35 borne axialement le coulissement du capuchon 33 en étant capturée dans une gorge du piston 37. Quelle que soit la position du pêne 26, seul le capuchon 33 dépasse hors de la douille 22. Cet assemblage permet à l'extrémité externe du pêne 26, formée par le capuchon 33, de pouvoir être pivotée autour de l'axe X26 sans que cette rotation ne soit transmise à la bielle 30, pour éviter que le mécanisme ne puisse être vandalisé par exercice d'un couple sur le pêne 26, par exemple avec une pince. Le ressort 31 permet également d'amortir un choc latéral important en se comprimant. On prévoit de préférence que l'effort de précontrainte fourni par le ressort 31 soit suffisant pour qu'il n'y ait pas de déplacement axial du capuchon 33 par rapport au piston 37 dans toutes les configurations décrites ci-après, hormis en présence d'un choc comme susmentionné.

Lorsque l'on parle des positions escamotée, de saillie et intermédiaire du pêne 26, on considère ce pêne 26 en tant que sous-ensemble, préférentiellement alors que le capuchon 33 est maintenu en butée vers l'extérieur par le ressort 31, contre la gorge du piston 37.

En variante, on peut prévoir que les pênes coulissent de manière antagoniste et synchronisé le long d'axes de pênes distincts, parallèles ou non.

Au lieu de pênes coulissants, on pourrait prévoir des pênes mobiles d'une autre façon par rapport au support, par exemple rotatifs par rapport au support autour d'axes fixes par rapport au support. Dans ce cas, les différentes positions escamotée, intermédiaire et de saillie sont définies par les différentes orientations adoptées par les pênes.

Dans le présent exemple, tel qu'illustré sur les figures 3 à 9, le dispositif 15 comprend un organe d'actionnement 28. L'organe 28 forme avantageusement un ensemble de plusieurs pièces mobiles les unes par rapport aux autres, comprenant notamment une partie primaire 29 et une partie secondaire 40. En tant que sous-ensemble, l'organe 28 est rotatif autour d'un axe principal confondu avec l'axe X13 par rapport à la fourche 13. Cette rotation peut être effectuée selon un sens direct S1 et selon un sens indirect S2 opposé au sens direct S1. L'organe 28 est préférentiellement logé dans la tige de fourche 21, entre les coudes 25. Un autre axe principal, distinct de l'axe X13 pourrait être choisi pour la rotation de l'organe d'actionnement 28. Dans la suite, on assimile l'axe principal à l'axe X13.

Le dispositif 15 comprend également deux bielles 30, qui assurent une fonction de transmission mécanique, pour lier mécaniquement la position des deux pênes 26 à l'orientation de l'organe 28. Chaque bielle 30 est liée :
- à la partie primaire 29, qui peut être qualifiée de vilebrequin, appartenant à l'organe 28, de façon rotative autour d'un axe X28 fixe par rapport à cette partie primaire 29 de l'organe 28 et parallèle à l'axe X13, les axes X28 étant disposés de façon diamétralement opposée par rapport à l'axe X13, à la même distance de cet axe X13, et
- à l'un des pênes 26, de façon rotative autour d'un axe X30 sécant avec l'axe X26, fixe par rapport au pêne 26 concerné, et parallèle à l'axe X13.

Par conséquent, la rotation de la partie primaire 29 de l'organe 28 entraîne le coulissement des deux pênes 26 à la fois, en sens inverse l'un de l'autre. Une rotation de la partie primaire 29 de l'organe 28 dans le sens direct S1 fait passer les pênes 26 successivement dans la position escamotée, dans la position intermédiaire, dans la première position de saillie et dans la deuxième position de saillie. Une rotation de la partie primaire 29 de l'organe 28 dans le sens indirect S2 fait passer les pênes 26 successivement dans la deuxième position de saillie, dans la première position de saillie, dans la position intermédiaire et dans la position escamotée. La position escamotée correspond à une orientation d'escamotage de l'organe 28, la position intermédiaire correspond à une orientation intermédiaire de l'organe 28, la première position de saillie correspond à une première orientation de saillie et la deuxième position de saillie correspond à une deuxième orientation de saillie, ces orientations étant citées par ordre successif dans le sens direct S1.

La transmission mécanique entre les pênes 26 et l'organe 28 peut être mise en configuration réversible et en configuration irréversible, par modification de l'orientation de l'organe 28. En configuration réversible, l'application d'un effort sur l'un des pênes 26 entraîne la rotation de l'organe 28 et l'application d'un effort sur l'organe 28 entraîne les pênes 26. La configuration réversible est obtenue notamment pour l'orientation d'escamotage, l'orientation intermédiaire et pour la première orientation de saillie, alors que la configuration irréversible est obtenue notamment pour la deuxième orientation de saillie. Le basculement entre la configuration réversible et la configuration irréversible est effectuée à une orientation de point mort haut, définie entre les deux orientations de saillie.

En orientation de point mort haut, les axes X28 sont sécants avec l'axe X26. Ainsi, à cette position, des efforts appliqués contre les pênes 26 dans la direction l'un de l'autre ne développent pas de couple, par l'intermédiaire des bielles 30, susceptible d'entraîner une rotation de l'organe 28, par effet de genouillère. On dit également que la transmission mécanique est en configuration irréversible en deuxième orientation de saillie, dans la mesure où, même si des efforts appliqués contre les pênes 26 dans la direction l'un de l'autre ne développeraient un couple apte à entraîner en rotation l'organe 28, cet organe serait entraîné dans le sens direct S1, de sorte que cela n'aurait pas pour effet de ramener l'organe 28 successivement en première orientation de saillie, en orientation intermédiaire et en orientation d'escamotage. Comme illustré sur la figure 9, on prévoit optionnellement une butée 32 solidaire de la partie primaire 29 de l'organe 28 pour borner à la deuxième orientation de saillie toute rotation de l'organe 28 dans le sens direct S1 au-delà de l'orientation de point mort haut. D'autres moyens de butée sont avantageusement prévus, comme décrit plus bas, notamment la mise en appui de deux surfaces 48 et 54 via un lobe 58. Dans le présent exemple, la butée 32 est formée par une aiguille s'étendant selon un axe parallèle à l'axe X13. En tout état de cause, en configuration irréversible, le mouvement des pênes 26 est bloqué, malgré toute application d'un effort sur les pênes 26.

En configuration réversible, des efforts appliqués contre les pênes 26 dans la direction l'un de l'autre développent un couple entraînant l'organe 28 dans le sens indirect S2, de façon à obtenir successivement la première orientation de saillie, l'orientation intermédiaire et l'orientation escamotée.

La transmission mécanique à bielles 30 illustrée est préférée. Toutefois, d'autres types de transmissions mécaniques pourraient permettre d'obtenir des configurations similaires, par exemple en équipant la partie primaire 29 de l'organe 28 d'une came avec un profil adapté, et les pênes 26 de moyens pour suivre la piste de came de l'organe 28, notamment un galet de roulement et un organe de rappel du pêne concerné contre la cette came. Encore d'autres variantes de transmissions mécaniques peuvent être imaginées pour des pênes rotatifs. On peut également prévoir un organe d'actionnement qui n'est pas rotatif, mais qui est par exemple coulissant, en adaptant la transmission mécanique en conséquence.

De manière générale, le dispositif de verrouillage comprend avantageusement un organe d'actionnement, qui est mobile par rapport au support, et une transmission mécanique, qui lie mécaniquement la position du pêne à la position de l'organe d'actionnement, et qui est configurée pour évoluer entre la configuration réversible dans laquelle la mobilité du pêne est autorisée par réversibilité de la transmission mécanique, et la configuration irréversible dans laquelle la mobilité du pêne est bloquée, ou limitée entre la position de point mort haut et la deuxième position de saillie, par irréversibilité de la transmission mécanique.

Dans le présent exemple, on a vu que la partie primaire 29 est liée directement à la transmission mécanique incarnée par les bielles 30, au niveau des axes X28. De préférence, l'organe 28 comprend également la partie secondaire 40 susmentionnée. Cette partie secondaire 40 est avantageusement disposée entre la partie primaire 29 et le bouchon 20. Plus précisément, la partie secondaire 40 est logée dans le creux du bouchon 20, à proximité d'un fond 27 du bouchon en étant entourée par une paroi cylindrique de ce dernier. La partie secondaire 40 est rotative par rapport à la fourche 13 autour de l'axe X13. La partie secondaire 40 est rotative par rapport à la partie primaire 29 autour de cet axe principal X13, de façon bornée entre une orientation dite «d'autorisation», illustrée notamment à la figure 13 et une orientation dite «de basculement », illustrée notamment à la figure 14. En orientation de basculement, la partie primaire 29 a effectué une rotation dans le sens indirect S2 par rapport à l'orientation d'autorisation, relativement à la partie secondaire 40. En orientation d'autorisation, la partie primaire 29 a effectué une rotation dans le sens direct S1 par rapport à l'orientation d'autorisation, relativement à la partie secondaire 40. Le secteur angulaire couvert par l'intervalle entre les deux orientations d'autorisation et de basculement est avantageusement inférieur à 45°, de préférence inférieur à 10°, par exemple 5°.

La partie secondaire 40, de forme générale cylindrique à base circulaire coaxiale avec l'axe X13, comprend une encoche sectorielle radiale 44 ménagée à partir de sa périphérie. L'aiguille 32 fixement attachée à la partie primaire 29, circule dans cette encoche 44, en étant bornée, lors de la rotation dans le sens direct S1 de la partie primaire 29 par rapport à la partie secondaire 40, par une paroi radiale indirecte 52 de l'encoche 44, à l'orientation d'autorisation.

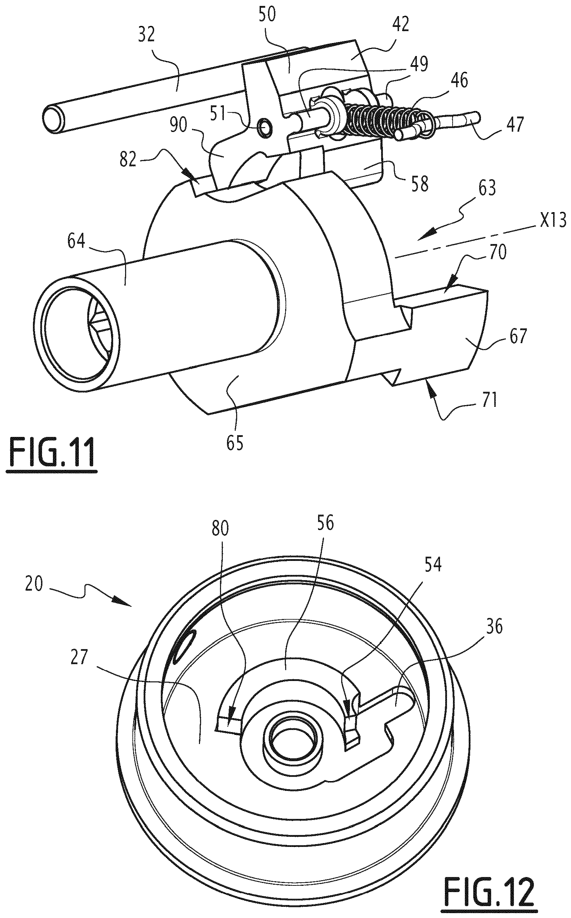

De préférence, un organe mobile 42, qui peut être qualifié de cliquet, est monté pivotant autour d'un axe parallèle à l'axe X13 dans l'encoche 44, en étant lié à la partie secondaire 40. Plus généralement, l'organe 42 est configuré pour être mobile, de façon à pouvoir être basculé entre une configuration déclenchée, illustrée notamment sur la figure 14, et une configuration enclenchée, illustrée notamment sur les figures 11 et 13. Dans l'exemple illustré, ces deux configurations correspondent à deux orientations distinctes de l'organe mobile 42, lequel tourne autour d'un couteau 49 de l'organe 42 formant un appui linéaire contre un rail d'une paroi radiale directe 48 de l'encoche 44. Le basculement de l'organe mobile 42 entre les deux configurations est avantageusement bistable. En pratique, on prévoit par exemple un organe de rappel élastique 46, sous la forme d'un ressort de rappel 46, représenté notamment à la figure 11, liant l'organe mobile 42 à la partie secondaire 40, en étant disposé pour rendre stable l'orientation déclenchée ainsi que l'orientation enclenchée de l'organe mobile 42, tout en maintenant l'appui du couteau contre la paroi 48. Ce ressort 46 se trouve tendu en prenant appui à chacune de ses extrémités sur deux tiges 47 et 51, la première tige 51 liée à l'organe mobile 42 et la seconde tige 47 liée à la partie secondaire 40. La position des tiges 47 et 51 est préférentiellement telle que, lorsque l'organe mobile 42 se trouve en position médiane, ces deux tiges 47 et 51 se trouvent alignées avec le point d'appui du couteau 49, rendant ainsi le système bistable de part et d'autre de cette position médiane. Même si l'association d'un couteau 49 et d'un ressort 46 est préférée pour des raisons de fiabilité et de facilité de fabrication, on aurait alternativement pu prévoir une simple charnière.

Comme visible sur la figure 14, l'organe 42 comprend un lobe externe 50 qui, en configuration déclenchée, est en appui contre la paroi 48, et en configuration enclenchée, est écarté de la paroi 48. Ce lobe externe 50 est également apte à recevoir en appui, à l'opposé de la paroi 48, l'aiguille 32 de la partie primaire 29, qui par rotation dans le sens indirect par rapport à la partie secondaire 40, entraîne l'organe 42 à basculer dans son orientation déclenchée depuis l'orientation enclenchée. Le lobe externe 50 se trouve alors interposé entre la paroi 48 et l'aiguille 32, de façon à borner la rotation en sens indirect de la partie primaire 29 par rapport à la partie secondaire 40, à l'orientation de basculement. En d'autres termes, en orientation d'autorisation, dans laquelle l'organe mobile est autorisé par l'aiguille 32 de la partie primaire 29 et par l'encoche 44 de la partie secondaire 40 à adopter la configuration d'enclenchement et la configuration de déclenchement, alors qu'en orientation de basculement, l'organe mobile 42 est mis et maintenu en configuration de déclenchement.

Le dispositif de verrouillage 15 comprend un organe de rappel 34, qui est configuré pour exercer un effort de rappel ou un couple de rappel sur l'organe d'actionnement 28. De préférence, l'organe de rappel 34 est un organe de rappel élastique. Par « organe de rappel élastique », on entend avantageusement que l'organe 34 est conçu pour accumuler un travail mécanique, du fait d'une propriété d'élasticité d'un matériau qu'il comprend, pour générer un effort de rappel ou un couple de rappel. L'effort ou le couple de rappel a tendance à rappeler l'organe d'actionnement 28 dans une position correspondant à la première position de saillie du pêne, lorsque la transmission mécanique est en configuration réversible et que l'organe d'actionnement est dans une position correspondant par exemple à la position escamotée ou intermédiaire. Typiquement, l'organe de rappel 34 peut être un ressort.

Dans l'exemple illustré, l'organe de rappel 34 est un ressort de torsion ou tout organe de rappel élastique équivalent, apte à exercer un couple de rappel en rotation dans le sens direct S1 sur la partie secondaire 40 de l'organe d'actionnement 28, par rapport à la fourche 13. En pratique, le ressort 34 est monté en interposition circulaire, par l'intermédiaire de pattes extrémales du ressort 34, entre une butée radiale 36 ménagée dans le bouchon 20, visible aux figures 5 et 12, et une butée radiale 38 ménagée dans la partie secondaire 40, visible aux figures 11 et 13 à 18. Le ressort 34 est principalement ménagé dans une zone concave 41 ménagée en creux dans une face axiale de la partie secondaire 40, du côté du bouchon 20. Sur la figure 5, par commodité, le ressort 34 est représenté au-dessus de la partie secondaire 40, alors qu'une fois monté, ce ressort 34 est situé entre la partie 40 et le bouchon 20, comme l'indique une flèche courbe.

Pour faciliter le montage du dispositif 15, on prévoit une bague élastique 53 de maintien axial de la partie secondaire 40 et de l'organe de rappel 34 au sein du bouchon 20, comme illustré sur la figure 5.

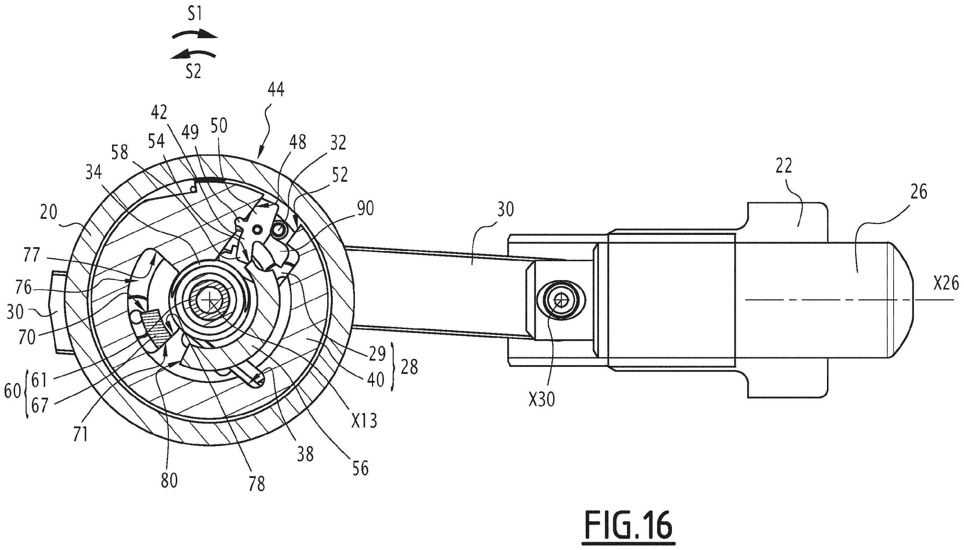

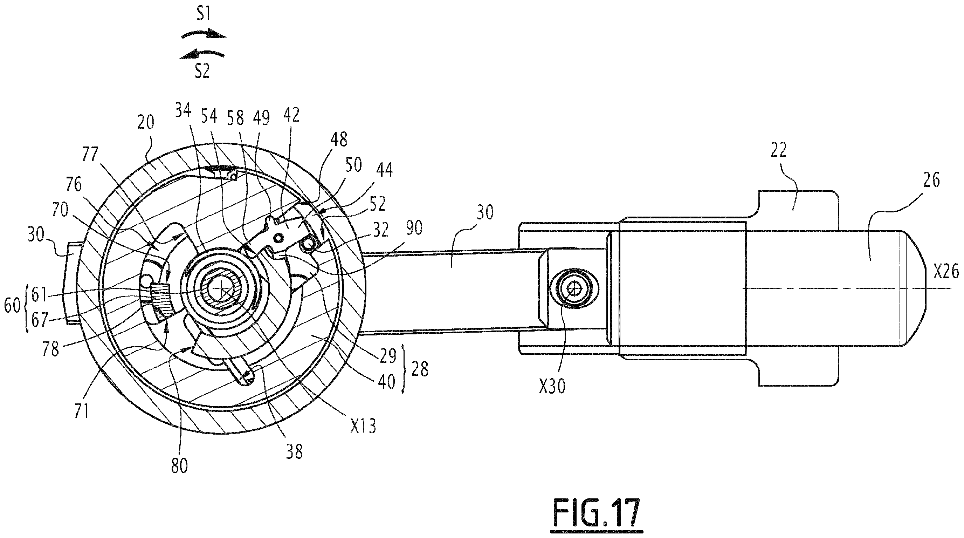

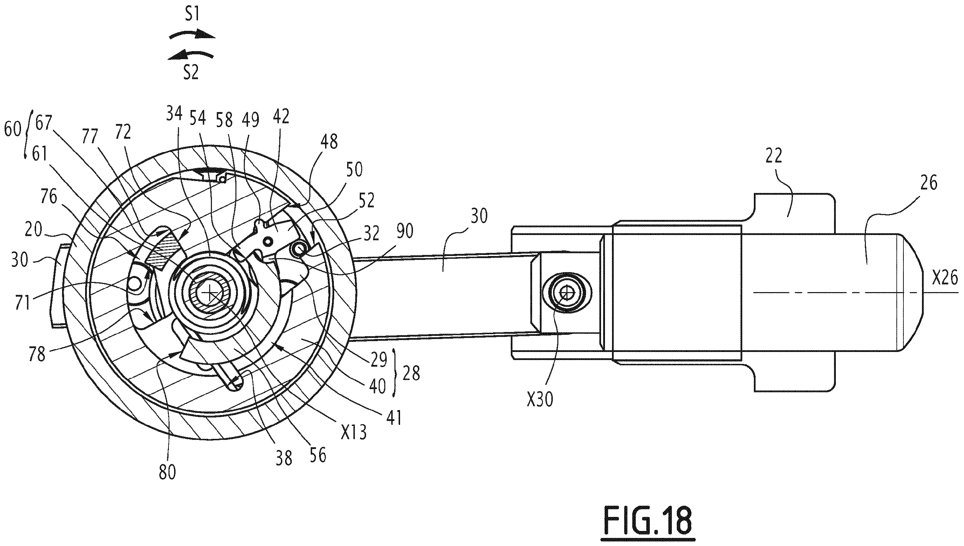

Le bouchon 20, ou toute autre partie du support intégré à la fourche 13, comprend une butée radiale indirecte dite butée d'enclenchement 54, formée par exemple sur une crête hémi-tubulaire 56 du bouchon 20, coaxiale avec l'axe X13 et faisant saillie axialement à partir du fond 27, notamment visible à la figure 12 à 18. Dans le cas d'espèce, la crête 56 vient se loger dans la zone concave 41 de l'organe d'actionnement 28. L'organe mobile 42 comprend un lobe interne 58 opposé au lobe externe 50 par rapport au couteau 49, ou plus généralement à son axe de pivotement. La butée 54 est configurée pour faire basculer l'organe mobile 42 en configuration enclenchée par appui sur le lobe interne 58, alors que l'organe mobile 42 était en configuration déclenchée, lorsque l'organe d'actionnement 28 passe de la première orientation de saillie à la deuxième orientation de saillie, comme illustré aux figures 16 à 18, sous l'action d'un organe de commande 60 décrit ci-après. Ce basculement a pour effet de mettre et/ou de maintenir la partie primaire 29 et la partie secondaire en orientation d'autorisation, comme visible aux figures 17 et 18.

Dans cette configuration de la figure 17, le pêne 26 est borné à la deuxième position de saillie, et l'organe 28 à sa deuxième orientation de saillie dans le sens direct S1 puisque la paroi radiale directe 48 est en appui contre la butée radiale indirecte 54, via le lobe 58.

Le dispositif de verrouillage 15, visible à la figure 5, comprend l'organe de commande 60, qui, dans le présent exemple, comprend une tige 61 coaxiale avec l'axe X13 et traversant la partie primaire 29, ainsi qu'une manivelle 63, disposée entre la partie primaire 29 et la partie secondaire 40, la tige 61 et la manivelle 63 étant fixement attachées l'une à l'autre. Dans le cas d'exemple, qui est préférentiel, l'organe 60 est actionnable par une rotation de cet organe 60 autour de l'axe X13 par rapport à la fourche 13 entre une orientation de déblocage, illustrée sur les figures 13 à 15, et une orientation de blocage, illustrée sur les figures 16 à 18, par rotation dans le sens direct depuis l'orientation de déblocage. En fonction des variantes de réalisation, on pourrait alternativement prévoir que l'organe 60 soit actionné par tout autre type de mouvement qu'une rotation, ou par une rotation autour d'un autre axe, entre deux positions distinctes de blocage et de déblocage.

Comme visible notamment sur la figure 11, la manivelle 63 comprend un socle 65 s'étendant essentiellement dans un plan orthogonal à l'axe X13 et par l'intermédiaire une manche 64 duquel elle est fixement liée à la tige 61. La manivelle 63 comprend également un doigt 67, radialement excentré par rapport à l'axe X13 et axialement saillant du socle 65 à l'opposé de la tige 61. Le doigt 67 présente une forme de crête, de forme courbe, formant une portion de tube contournant l'axe X13 à une distance radiale constante. Comme visible à la figure 11, ainsi qu'aux figures 13 à 18, une surface de butée radiale directe 70 et une surface de butée radiale indirecte 71 sont formées sur le doigt 67. De la surface 70 à la surface 71, le doigt 67 s'étend sur un angle inférieur à 90°, par rapport à l'axe X13, et de préférence égale à 35°. En variante, les surfaces de butée 70 et 71 peuvent être formées à une telle distance angulaire, sur un élément se présentant sous une forme différente que le doigt 67 susmentionné.

De manière générale, la partie secondaire 40 est configurée pour entrer en butée contre les différentes surfaces de butée de l'organe de commande 60, de façon que l'organe de commande 60, en fonction de son orientation, borne et détermine les orientations possibles de la partie secondaire 40, et plus généralement de l'organe d'actionnement 28.

La rotation de l'organe 60 par rapport à la fourche 13 autour de l'axe X13 dans le sens indirect est bornée à l'orientation de déblocage par une mise en butée de la surface 71 contre une surface radiale de butée directe 80, appartenant dans le présent exemple au bouchon 20. Dans l'exemple, la surface radiale 80 est formée sur la crête 56, comme visible aux figures 12 à 18. De préférence, l'écart angulaire entre les surfaces 54 et 80 est inférieur à 200°, et est préférentiellement égal à 158°.

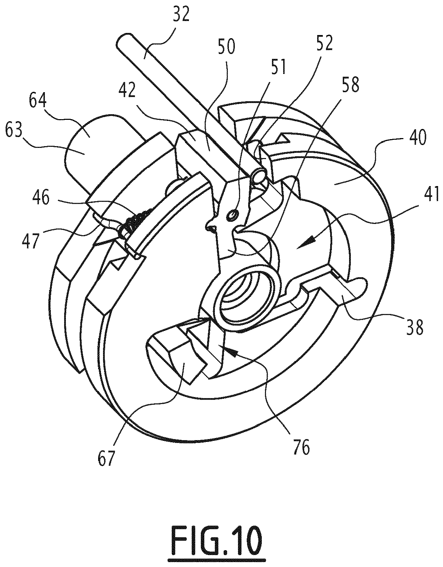

Le socle 65 est accommodé dans une zone concave 74 ménagée en creux dans une face axiale de la partie secondaire 40, du côté de la partie primaire 29. Le doigt 67 traverse la partie secondaire 40 au travers d'une ouïe 76 de cette dernière, comme visible notamment sur les figures 10 et 13 à 18. L'ouïe 76 traverse axialement de part en part la partie secondaire 40, en particulier depuis la zone concave 74 jusqu'à la zone concave 41. L'ouïe 76 s'étend sur une zone courbe contournant l'axe X13 à une distance radiale constante. L'ouïe 76 définie une surface de butée radiale indirecte 77 et une surface de butée radiale directe 78 à ses extrémités. Les surfaces 77 et 78 sont angulairement espacées d'un angle inférieur à 180°, de préférence environ 86,5° par rapport à l'axe X13. En conséquence, le débattement en rotation de l'organe de commande 60 autour de l'axe X13 par rapport à la partie secondaire 40 est borné par la circulation du doigt 67 entre les surfaces 77 et 78 de l'ouïe 76, la surface 70 étant prévue pour entrer en butée contre la surface 77, et la surface 71 contre la surface 78. Ainsi, de façon générale, l'organe d'actionnement 28 est actionné par l'organe de commande 60 et par l'organe de rappel 34.

De façon générale, les surfaces 70 et 77 bornent la rotation de la partie secondaire 40 de l'organe d'actionnement 28 dans le sens indirect S2 autour de l'axe X13 par rapport à l'organe de commande 60.

En particulier, lorsque l'organe de commande 60 est en orientation de déblocage, dans la configuration de la figure 15, si la partie secondaire 40 est tournée dans le sens indirect jusqu'à mise en butée de la surface 70 contre la surface 77, par exemple par l'exercice d'un effort sur le pêne 26 visant à déplacer celui-ci depuis la première position de saillie en direction de la position escamotée, à l'encontre du couple de rappel fourni par l'organe de rappel 34, le déplacement du pêne 26 est borné à la position escamotée, et la partie secondaire 40 à l'orientation d'escamotage.

En particulier, lorsque l'organe 60 est en orientation de blocage comme c'est le cas sur la figure 18, lors de la mise en butée de la surface 70 contre la surface 77, la partie primaire 29 de l'organe d'actionnement 28 est en deuxième orientation de saillie. En outre, dans cette situation de la figure 18, la partie secondaire 40 est mise en butée contre la butée d'enclenchement 54 par l'intermédiaire du lobe interne 58 de l'organe 42.

La mise en butée des surfaces 71 et 80 borne la rotation de la partie secondaire 40 de l'organe d'actionnement 28 dans le sens direct S1 autour de l'axe principal X13 par rapport à l'organe de commande 60. En conséquence, lorsque l'organe de commande 60 est en orientation de déblocage, la partie secondaire 40 de l'organe d'actionnement 28 est en première orientation de saillie lorsque les surfaces 71 et 80 sont en butée l'une contre l'autre. Sous l'action du couple de rappel exercé par l'organe de rappel 34 dans le sens direct S1, la partie secondaire 40 est maintenue en butée contre l'organe de commande 60, dans le sens direct S1, par mise en butée des surfaces 71 et 80. C'est le cas dans la configuration de la figure 15. Dans cette configuration, si un effort est appliqué sur le pêne 26 visant à le déplacer en position escamotée, le pêne 26 est déplacé à l'encontre du couple de rappel que l'organe de rappel 34 exerce sur la partie secondaire 40, ce qui correspond, dans le cas de la figure 15, à la position escamotée du pêne 26. Par conséquent, la configuration du dispositif de verrouillage 15 sur la figure 15 peut être qualifiée de « configuration d'engagement ». De façon pratique, dans cette configuration d'engagement, les pênes 26 sont mobiles de façon synchronisée entre la position escamotée, qui est configurée pour autoriser l'engagement et le désengagement du cycle 3 dans l'une des bornes 5, et la première position de saillie, qui est configurée pour interdire le désengagement du cycle 3 lorsque le cycle 3 est engagé dans l'une des bornes 5, les pênes 26 étant rappelés dans la première position de saillie par l'organe de rappel 34. Dans cette configuration d'engagement, la configuration réversible de la transmission mécanique est adoptée. Dans cette configuration d'engagement, l'organe d'actionnement 28 est en orientation de basculement.

A partir de cette configuration d'engagement de la figure 15, si l'organe de commande 60 est mis en rotation dans le sens direct S1, depuis l'orientation de déblocage jusqu'à l'orientation de blocage, une mise en rotation de l'organe d'actionnement 28, en particulier de sa partie secondaire 40, dans le sens direct S1 par l'organe de rappel 34, est autorisée, l'organe de rappel 34 maintenant le contact entre les surfaces 71 et 80, comme illustré sur la figure 16. L'organe d'actionnement 28 est alors entraîné jusqu'à la deuxième orientation de saillie par l'organe de rappel 34, comme illustré sur la figure 17, de sorte qu'à cet instant, la transmission mécanique est passée de la configuration réversible à la configuration irréversible. En particulier, la partie secondaire 40 est arrêtée par mise en butée dans le sens direct contre la surface 54, ce qui fait à la fois passer l'organe mobile 42 en configuration enclenchée, le lobe interne 58 étant interposé entre la paroi radiale directe 48 et la surface 54, et à la fois passer l'organe d'actionnement 28 depuis l'orientation de basculement jusqu'à orientation d'autorisation. Cela se produit alors que l'organe de commande 60 est encore dans une orientation intermédiaire entre l'orientation de déblocage et l'orientation de blocage. La partie secondaire 40 étant à cet instant en butée dans le sens direct par rapport à la fourche 13, la poursuite de la rotation dans le sens direct de l'organe de commande 60 a pour effet de séparer les faces 71 et 80, le doigt 67 de l'organe de commande 60 progressant en rotation dans l'ouïe 76 jusqu'à mise en butée dans le sens direct S1 des surfaces 70 et 77, comme illustré sur la figure 18. L'organe de commande 60 ainsi arrêté dans le sens direct contribue à maintenir la partie 40 en butée dans le sens direct, même si la transmission mécanique est en configuration irréversible. La configuration du dispositif de verrouillage 15 obtenue à la figure 18 peut être qualifiée de « configuration de verrouillage ». Dans cette configuration de verrouillage, les pênes 26 sont bloqués dans la deuxième position de saillie, de sorte qu'ils ne peuvent pas être mus de façon significative par l'exercice d'un effort sur l'un d'entre eux. Par conséquent, le désengagement du cycle 3 est interdit, lorsque le cycle est engagé dans la borne 5. Même lorsque le cycle n'est pas engagé dans la borne 5, les pênes 26 étant bloqués, c'est-à-dire verrouillés de façon à être immobiles par rapport au support, lesdits pênes 26 ne peuvent pas être déplacés vers la position escamotée ou vers la position intermédiaire si l'on appuie dessus. Pour obtenir cet effet de blocage des pênes 26, on a vu ci-avant que la transmission mécanique entre les pênes 26 et l'organe 28 est en configuration irréversible. De plus, comme expliqué ci-avant, un actionnement de l'organe de commande 60, dans cet exemple, en rotation depuis l'orientation de déblocage jusqu'à l'orientation de blocage, fait passer le dispositif de verrouillage 15 depuis la configuration d'engagement de la figure 15 jusqu'à la configuration de verrouillage de la figure 18. Dans cette configuration de verrouillage, l'organe d'actionnement 28 est en orientation d'autorisation.

Par ailleurs, l'organe de commande 60 comprend une surface radiale indirecte 82, préférentiellement formée à la périphérie du socle 65, comme visible notamment sur les figures 11 et 13 à 16. Par ailleurs, l'organe mobile 42 comprend un lobe d'entraînement 90, qui est axialement à hauteur du socle 65.

Lorsque l'organe mobile 42 est en configuration déclenchée, comme c'est le cas aux figures 14, 15 et 16, le lobe 90 est positionné radialement à l'écart du socle 65, de sorte que l'organe mobile 42 n'est pas susceptible d'arriver en butée contre la surface 82 et s'oppose ainsi pas à la rotation de la partie secondaire 40 de l'organe d'actionnement 28 par rapport à l'organe de commande 60.

Lorsque l'organe mobile 42 est en configuration enclenchée, comme représenté sur les figures 11, 13, 17 et 18, le lobe d'entraînement 90 est positionné de façon à ce que la surface radiale 82 vienne en butée contre le lobe 90, par mise en rotation dans le sens indirect S2 de l'organe de commande 60.

Cette surface de butée radiale indirecte 82 borne donc la rotation de la partie secondaire 40 de l'organe d'actionnement 28, dans le sens direct S1 autour de l'axe X13 par rapport à l'organe de commande 60, par l'intermédiaire de l'organe mobile 42. Par conséquent, si l'organe de commande 60 est entraîné en rotation depuis son orientation de blocage (figure 18) jusqu'à son orientation de déblocage (figure 13), c'est-à-dire dans le sens indirect S2, l'organe de commande 60 entraîne la partie secondaire 40 de l'organe d'actionnement 28 en rotation par rapport au support selon le sens indirect S2. Cet entraînement est effectué par l'intermédiaire de l'organe mobile 42, dont l'extrémité du lobe 90 vient s'engager de manière stable contre la surface radiale 82 réalisée dans le socle 65 de l'organe de commande 60, l'organe mobile 42 transmettant à son autre extrémité en forme de couteau 49, l'effort d'entrainement de sens S2 à la partie secondaire 40 de l'organe d'actionnement 28. Autrement dit, cet entraînement est effectué par mise en butée du lobe 90 de l'organe mobile 42 de la partie secondaire 40 de l'organe d'actionnement 28, contre la surface 82 de l'organe de commande 60. Cette phase d'entrainement par l'intermédiaire de l'organe mobile 42 est particulièrement visible à la figure 13, dans sa fin de course de sens indirect S2.

Lorsque l'organe de commande 60 passe de l'orientation de blocage, comme sur la figure 18, à l'orientation de déblocage, comme sur la figure 13, l'entraînement dans le sens indirect S2 de l'organe d'actionnement 28 est effectué depuis la deuxième orientation de saillie jusqu'à l'orientation intermédiaire, à l'encontre du couple de rappel exercé par l'organe de rappel 34. Lors de cette rotation depuis la configuration de verrouillage de la figure 18, la transmission mécanique est passée de la configuration irréversible à la configuration réversible. La configuration de la figure 13 peut être qualifiée de « configuration de désengagement », dans laquelle la transmission mécanique est en configuration réversible. En pratique, l'actionnement de l'organe de commande 60, dans le présent exemple depuis l'orientation de blocage jusqu'à l'orientation de déblocage, entraîne le passage de la configuration de verrouillage à cette configuration de désengagement. En configuration de désengagement, l'organe de commande 60 est venu en butée dans le sens indirect S2 par mise en contact des surfaces 71 et 80, ce qui correspond à son orientation de déblocage.

Dans la configuration de désengagement illustrée sur la figure 13, l'organe mobile 42 est en configuration enclenchée et l'organe d'actionnement 28 en orientation d'autorisation. Dans cette configuration de désengagement, l'exercice d'un effort sur l'un des pênes 26, visant à entraîner ce pêne 26 depuis la position intermédiaire jusqu'à la position escamotée fait passer l'organe d'actionnement 28 de l'orientation d'autorisation à l'orientation de basculement, comme illustré sur la figure 14. Plus précisément, l'exercice d'un tel effort provoque la rotation dans le sens S2 de la partie primaire 29 et de son aiguille cylindrique 32 de l'organe d'actionnement 28, cette aiguille cylindrique 32 étant insérée entre la face radiale 52 de la partie secondaire 40 et le lobe 50 de l'organe mobile 42, dans cette rotation de sens S2, cette aiguille 32 fait alors pivoter par appui sur le lobe 50, l'organe mobile 42 de la position stable enclenchée visible en figure 13 à la position stable déclenchée visible en figure 14. On peut remarquer que dans cette phase de basculement de l'organe mobile 42 l'aiguille 32 va devoir transmettre un effort suffisant pour vaincre le couple exercé par le ressort de rappel 34. En conséquence, l'organe mobile 42 est passé en configuration déclenchée, et ne s'oppose plus à la rotation relative de l'organe de commande 60 vis-à-vis de l'organe d'actionnement 28. Une fois l'effort sur le pêne 26 relâché, l'organe d'actionnement 28 est ramené dans la configuration d'engagement de la figure 15 sous l'action de l'organe de rappel 34, c'est-à-dire dans la configuration de la figure 15. Ainsi, dans la configuration de désengagement, les pênes 26 sont mobiles entre la position intermédiaire et la position escamotée, le passage de la position intermédiaire à la position escamotée étant opéré à l'encontre du couple de rappel de l'organe de rappel 34, et ayant pour effet de désaccoupler l'organe 28 de l'organe 60. Dans cette configuration de désengagement, le dispositif de verrouillage 15 est configuré de sorte que l'organe de rappel 34 met le dispositif de verrouillage en configuration d'engagement, si un effort est exercé sur au moins l'un des pênes 26 de façon à amener les pênes 26 en position escamotée. Il ressort du fonctionnement décrit ci-dessus que, dans cette configuration de désengagement, le mouvement des pênes 26 est borné à la position intermédiaire et ne peut atteindre la position de saillie sans passer d'abord par la position escamotée.

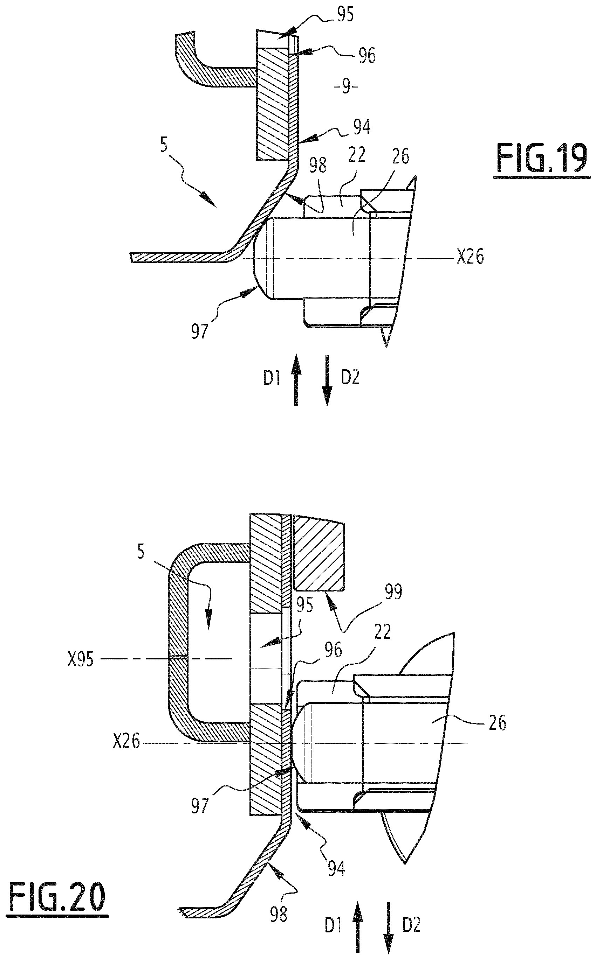

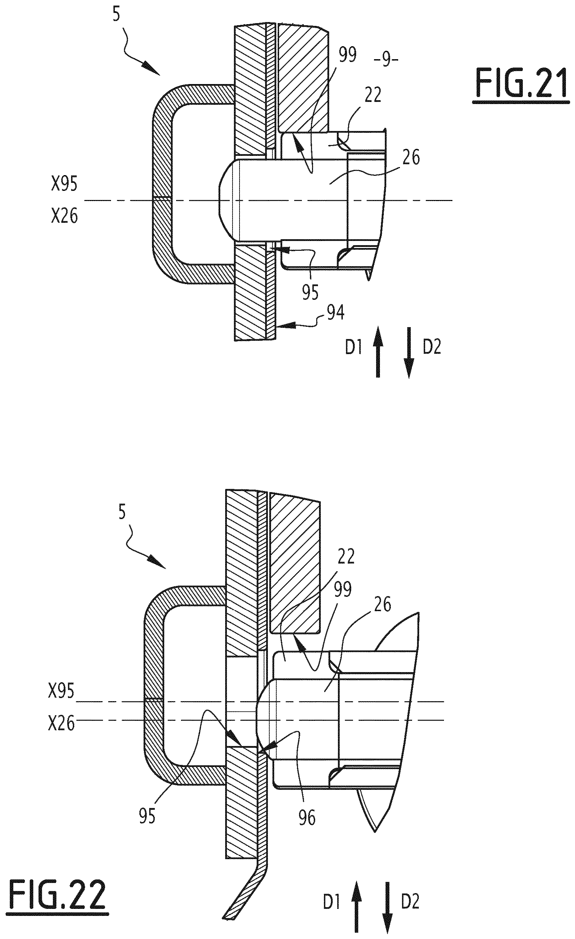

La figure 21 illustre un cas où le dispositif de verrouillage 15 du cycle 3, est engagé dans la borne 5, alors que les figures 19, 20 et 22 illustrent des cas où le dispositif 15 n'est pas engagé dans la borne 5.

Chaque montant 7 de la borne de stockage 5 définit deux flancs internes 94, qui sont deux surfaces parallèles et verticales, pour délimiter l'ouverture 9 de la borne 5.

Tel qu'illustré aux figures 1 et 19 à 22, l'engagement du dispositif de verrouillage 15 dans la borne 5 s'effectue par déplacement du dispositif 15 par rapport à la borne 5, selon une direction D1, qui est fixe par rapport à la fourche 13 et orthogonale à l'axe X26, alors que :
- le dispositif 15 est orienté de sorte que cette direction D1 est parallèle aux flancs 94, et
- le dispositif 15 est déplacé de sorte que les douilles 22 sont positionnées entre les flancs 94.

Le désengagement s'effectue par déplacement du dispositif 15 selon une direction D2 opposée. Le déplacement du dispositif 15 dans les directions D1 et D2 est obtenu, dans le présent exemple, par roulage du cycle 3 respectivement selon sa direction de marche avant et selon sa direction de marche arrière.

Une gâche 95 est ménagée en creux à partir de chaque flanc 94. Chaque gâche 95 forme un orifice débouchant, préférentiellement de forme cylindrique à base circulaire ou oblongue, pour accueillir en correspondance de forme l'un des pênes 26 en première ou en deuxième position de saillie, comme illustré sur la figure 21. Plus précisément, les gâches 95 sont coaxiales avec un axe de gâches X95 ou pour le moins, en face l'une de l'autre, attaché à la borne 5, et sont ouvertes en direction l'une de l'autre, vers l'intérieur de l'ouverture 9. Les gâches 95 et les flancs 94 sont séparés deux à deux, le long de l'axe X95, par l'espace libre formé par l'ouverture 9, pour loger le dispositif de verrouillage 15 et la roue 11 du cycle 3. Comme visible sur la figure 21, lorsque le dispositif 15 est engagé dans la borne 5, les axes X26 et X95 sont coaxiaux, ou à faible distance l'un de l'autre à hauteur des gâches 95.

Comme illustré sur la figure 21, lorsque les pênes 26 sont en première ou en deuxième position de saillie tout en étant engagés dans les gâches 95, une tentative de déplacement du dispositif 15 selon les directions D1 et D2 n'entraîne pas un désengagement des pênes 26 des gâches 95, de sorte que le dispositif 15 est verrouillé à la borne 5.

La distance séparant les flancs 94, le long de l'axe X95, est légèrement supérieure, sinon égale, à la distance séparant les extrémités des douilles 22, comme visible sur les figures 19 à 22. De plus, la distance séparant les flancs 94 est légèrement supérieure, sinon égale, à la distance séparant les extrémités 97 des pênes 26, lorsqu'ils sont en position escamotée comme visible sur la figure 20. Par conséquent, lorsque les pênes 26 sont en position escamotée, le dispositif 15 peut être librement déplacé dans les directions D1 et D2, alors même que l'axe X26 est positionné de façon à traverser les flancs 94.

La borne 5 comprend deux rampes d'escamotage 98. Chaque rampe 98 prolonge immédiatement l'un des flancs 94 dans la direction D2, en étant orienté de façon divergente l'une de l'autre, c'est-à-dire que la distance séparant les rampes 98, mesurée parallèlement à l'axe X95, est augmentée au fur et à mesure d'un déplacement selon la direction D2.

Tel qu'illustré sur la figure 19, lorsque le dispositif 15 est en configuration d'engagement hors de la borne 5 et que l'on effectue une action d'engagement du dispositif 15 dans la borne 5, incluant un déplacement selon la direction D1 du dispositif 15 jusqu'à ce que les pênes 26 entrent en contact avec les rampes 98, ces rampes 98 coopèrent avec les extrémités libres 97 respective de chaque pêne 26, de façon à déplacer les pênes 26 depuis la première position de saillie jusqu'à la position escamotée, à l'encontre de l'organe de rappel 34, ce qui est illustré aux figures 19 et 20. Si l'action d'engagement dans la direction D1 est poursuivie comme illustré sur la figure 20, les pênes 26 longent les flancs 94 en étant maintenus en position escamotée par ces derniers à l'encontre de l'organe de rappel 34. Si l'action d'engagement est poursuivie, les pênes 26 atteignent les gâches 95 comme illustré sur la figure 21, alors qu'ils ont été mis en position escamotée par les rampes 98 et ont été maintenus dans cette position escamotée par les flancs 94. Les pênes 26 sont alors librement déplacés jusqu'à la première position de saillie par l'organe de rappel 34, les pênes 26 pénétrant ainsi les gâches 95 comme illustré sur la figure 21, pour verrouiller le dispositif de verrouillage 15 à la borne de stockage 5.

La borne 5 comprend deux surfaces de butée 99 pouvant optionnellement être amorties, contre lesquelles les douilles 22 sont configurées pour arriver respectivement en contact, afin de borner le déplacement du dispositif 15 à la position engagée de la figure 21, lorsque le dispositif 15 est déplacé dans la direction D1.

Une fois les pênes 26 engagés dans les gâches 95, on fait avantageusement basculer le dispositif 15 en configuration de verrouillage, par actionnement de l'organe de commande 60, pour sécuriser davantage ce verrouillage et faire passer les pênes 26 en deuxième position de saillie.

Chaque gâche 95 comprend un bord 96, lequel est avantageusement chanfreiné ou étagé, comme c'est le cas dans l'exemple des figures. Alternativement ou de façon additionnelle, l'extrémité libre 97 de chaque pêne 26 comprend également une forme arrondie, chanfreinée ou étagée. En tout état de cause, l'extrémité 97 et le bord 96 sont prévus pour coopérer grâce à leur forme réciproque. Grâce à ces formes réciproques, lorsque le dispositif 15 est basculé en configuration de désengagement par action sur l'organe 60, alors que les pênes 26 sont engagés dans les gâches 95, un déplacement du dispositif 15 selon la direction D2 entraîne les pênes 26 depuis leur position intermédiaire vers leur position escamotée, à l'encontre de l'organe de rappel 34, comme illustré sur la figure 22. Cela fait basculer le dispositif 15 en configuration d'engagement.

Si l'on poursuit le désengagement dans la direction D2, le dispositif 15 étant en configuration d'engagement, les pênes 26 sont maintenus en position escamotée par les flancs 94 à l'encontre de l'organe de rappel 34, ce qui permet un libre déplacement du dispositif 15 selon la direction D2 comme illustré sur la figure 20. Si l'on poursuit le déplacement en direction D2, on autorise l'organe 34 à faire passer les pênes 26 en première position de saillie, comme visible sur la figure 19. Le dispositif 15 est alors libéré de la borne 5.

Dans le présent exemple, le dispositif de verrouillage 15 comprend un système de pilotage embarqué sur le cycle 3, au fonctionnement automatique.

Ce système de pilotage comprend un actionneur de commande 91 configuré pour actionner l'organe de commande 60. Cet actionneur de commande 91 est donc apte à faire passer le dispositif 15 d'une configuration à l'autre via l'organe de commande 60. L'actionneur 91 est axialement disposé au-dessus de l'organe d'actionnement 28, dans la tige de fourche 21, tel qu'illustré sur les figures 2 à 5. L'actionneur 91 se présente sous la forme d'un moteur, préférentiellement un moteur électrique, qui peut notamment être alimenté par une réserve d'énergie du dispositif 15, telle qu'une batterie, embarquée sur le cycle 3. L'actionneur 91 est configuré pour entraîner l'organe de commande 60 en rotation dans les deux sens S1 et S2, autour de l'axe X13, par rapport à la fourche 13, via la tige 61.

Le système de pilotage comprend de préférence un automate embarqué de pilotage de l'organe de commande par l'intermédiaire de l'actionneur de commande 91, le dispositif de pilotage étant configuré pour actionner l'organe de commande.

Le système 1 comprend quant à lui avantageusement un ensemble de moyens débarqués, dont une partie au moins est prévue sur les bornes 5, pour interagir avec le système de pilotage du dispositif de verrouillage 15. Parmi ces moyens débarqués, le système 1 comprend notamment des moyens, connus en soi, pour vérifier que le cycle 3 et son dispositif de verrouillage 15 sont autorisés à être engagés et mis en configuration de verrouillage dans une borne 5 donnée. Pour cela, chaque borne 5 comprend avantageusement un détecteur actif, ou un élément d'identification passif, tel qu'une puce RFID (identification radio-fréquentielle), ou tout moyen équivalent, apte à reconnaitre, ou à être reconnu, si l'objet engagé dans la borne 5 est bien le dispositif de verrouillage 15 de l'un des cycles 3. Pour cela, le dispositif de verrouillage 15 est réciproquement pourvu d'un élément d'identification passif, tel qu'une puce RFID, apte à être reconnu le détecteur de la borne 5, ou un détecteur apte à reconnaître l'élément d'identification passif de la borne 5, ou tout moyen équivalent. De préférence, l'élément d'identification et le détecteur sont positionnés de façon à ce que la détection soit faite lorsque le dispositif 15 est engagé dans la borne 5. Le système 1 comprend des moyens incluant des serveurs et un réseau de télécommunication apte à décider automatiquement si le dispositif de verrouillage 15 est autorisé à être mis en configuration de verrouillage à cette borne 5. Le système 1 comprend un émetteur, par exemple prévu sur la borne 5 en question, configuré pour émettre une autorisation de verrouillage, si le dispositif de verrouillage 15 est considéré comme autorisé. Le système de pilotage du dispositif de verrouillage 15 comprend quant à lui un récepteur de l'autorisation de verrouillage, apte à recevoir cette autorisation, par exemple via une communication sans fil. A réception de l'autorisation, l'automate de pilotage met le dispositif de verrouillage en configuration de verrouillage, depuis la configuration d'engagement, par actionnement de l'actionneur 91 pour faire passer l'organe de commande 60 en orientation de blocage.

La possibilité pour un utilisateur d'utiliser le système 1 est soumise à un système d'autorisations, accordée à l'utilisateur, par exemple lorsqu'il est abonné à un service de mise à disposition du système 1. Le système 1 comprend un système de vérification de l'autorisation de l'utilisateur. De façon connue, pour faire cette vérification d'autorisation, il est prévu que l'utilisateur présente avantageusement une carte d'abonnement, ou tout autre moyen d'authentification, ou effectue un paiement ou une inscription, lorsqu'il est à proximité d'un cycle 3 en configuration de verrouillage à l'une des bornes 5 et qu'il souhaite utiliser ce cycle 3, les moyens nécessaires étant prévus pour vérifier cette authentification de façon automatique. Une fois l'utilisateur considéré comme autorisé par les moyens de décision du système 1, un émetteur du système 1, par exemple le même émetteur que susmentionné, prévu sur la borne 5, est configuré pour émettre une autorisation de désengagement, si le dispositif de verrouillage 15 est considéré comme autorisé par les moyens de décision. Lorsque le récepteur d'autorisations, ou optionnellement un autre récepteur d'autorisation, appartenant au système de pilotage du dispositif 15, reçoit cette autorisation de désengagement, l'automate de pilotage commande à l'actionneur 91 de mettre le dispositif 15 en configuration de désengagement, par actionnement de l'organe de commande 60.

Une fois la configuration de désengagement adoptée, il suffit alors à l'utilisateur de tirer sur le cycle 3 de façon à le désengager de la borne 5, faisant ainsi passer mécaniquement le dispositif 15 de la configuration de désengagement à la configuration d'engagement.

Le dispositif 15 peut également comprendre un câble antivol, dont une extrémité est solidaire d'un élément du support du dispositif 15 ou du cycle 3, ainsi qu'un verrou apte à capturer ou libérer l'autre extrémité du câble. Ce verrou peut avantageusement être actionné à l'aide de l'actionneur 91, en étant notamment monté sur la tige 61 de l'organe 60. Un exemple de verrou et de câble antivol de ce type est décrit dans FR 2 947 237 A1, le câble étant référencé 120 et le verrou 100.

Le dispositif 15 peut également comprendre un câble antivol, dont une extrémité est solidaire d'un élément du support du dispositif 15 ou du cycle 3, ainsi qu'un verrou apte à capturer ou libérer l'autre extrémité du câble. Ce verrou peut avantageusement être actionné à l'aide de l'actionneur 91, en étant notamment monté sur la tige 61 de l'organe 60. Un exemple de verrou et de câble antivol de ce type est décrit dans FR 2 947 237 A1, le câble étant référencé 120 et le verrou 100.

Le dispositif 15 peut également comprend un moyen antivol configuré pour bloquer l'actionnement en rotation de la fourche 13 par rapport au cadre 14, autrement dit bloquer la direction du cycle 3, ou pour le moins pour limiter le couple transmis entre la fourche 13 et le cadre 14. Ce type de moyen est parfois appelé « Neiman ». On peut avantageusement prévoir que ce moyen antivol est actionné par l'organe de commande 60, pour passer d'un mode de blocage à un mode de déblocage. En particulier, ce moyen antivol peut être commandé par la tige 61. Un exemple de moyen antivol de ce type est décrit dans FR 2 947 237 A1, notamment à la figure 10.

On pourrait prévoir d'utiliser le dispositif de verrouillage 15 en le faisant passer d'une configuration à l'autre hors de toute borne 5 afin d'actionner le verrou susmentionné et/ou le moyen antivol susmentionné. Pour passer de la configuration de désengagement à la configuration d'engagement, on peut alors engager le dispositif 15 dans la direction D1 dans la borne 5, par exemple.

En variante, on pourrait prévoir que l'organe de commande 60 soit actionnable à la main, via un système de clé et de serrure, ou à l'aide d'un outil, la présence de l'actionneur 91 et du système d'autorisation étant alors facultative. Dans ce cas, le fait que l'utilisateur possède la clé ou l'outil approprié garantit qu'il s'agit d'un utilisateur autorisé, de sorte que le système de pilotage et les moyens débarqués ne sont pas forcément nécessaires.

De manière générale, une utilisation du dispositif 15 comprend les étapes suivantes :
- mise du dispositif de verrouillage 15 en configuration de verrouillage, depuis la configuration d'engagement, alors que le dispositif de verrouillage a été engagé dans la borne de stockage 5 ; et
- mise du dispositif de verrouillage 15 en configuration de désengagement, depuis la configuration de verrouillage, lorsque l'on est autorisé à désengager le dispositif de verrouillage de la borne de stockage 5, alors que le dispositif de verrouillage 15 est engagé dans cette borne de stockage 5.

Pour faciliter le montage et la maintenance du dispositif 15 installé sur le cycle 3, on prévoit qu'une partie du dispositif 15 forme un sous-ensemble démontable, sans démontage du reste du dispositif 15, lequel reste à demeure sur le cycle 3, en étant attaché à la tige de fourche 21. Plus précisément, ce sous-ensemble démontable comprend principalement l'organe de rappel 34 et la partie secondaire 40, ainsi qu'avantageusement l'organe mobile 42, le ressort 46, les tiges 47 et 51. Ce sous-ensemble démontable comprend également le bouchon 20 et de préférence la bague élastique 53, qui permettent de maintenir l'organe de rappel 34 et la partie secondaire 40 montés dans le bouchon 20 même lorsque le sous-ensemble est démonté du cycle 3. Plus généralement, les différents éléments du sous-ensemble démontable restent solidaires les uns des autres lorsque ce sous-ensemble est démonté du cycle 3. Une fois le sous-ensemble démontable démonté, un sous-ensemble à demeure du dispositif 15 reste logé dans le cycle 3, comprenant notamment l'organe de commande 60, la partie primaire 29, les pênes 26 et leurs bielles 30.

## Revendications

1. Dispositif de verrouillage (15) pour verrouiller un cycle (3) à une borne de stockage (5) du cycle (3), le dispositif de verrouillage (15) pouvant être engagé dans la borne de stockage et le dispositif de verrouillage (15) pouvant être désengagé de la borne de stockage, le dispositif de verrouillage (15) comprenant un support (20, 21), qui est conçu pour être intégré à une partie du cycle (3), et au moins un pêne (26), qui est mobile par rapport au support (20, 21) ; le dispositif de verrouillage (15) étant configuré pour évoluer entre :
- une configuration d'engagement, dans laquelle le pêne (26) est mobile entre une position escamotée, qui est prévue pour autoriser l'engagement et le désengagement du dispositif de verrouillage (15), et une première position de saillie, qui est prévue pour interdire le désengagement du dispositif de verrouillage (15) lorsque celui-ci est engagé, le pêne (26) étant rappelé dans la première position de saillie par un organe de rappel (34) du dispositif de verrouillage (15) lorsque le dispositif de verrouillage (15) est en configuration d'engagement ;
- une configuration de verrouillage :
∘ dans laquelle passe le dispositif de verrouillage (15), à partir de la configuration d'engagement, par actionnement d'un organe de commande (60) du dispositif de verrouillage (15), et
∘ dans laquelle le pêne (26) est bloqué dans une deuxième position de saillie, qui peut optionnellement être confondue avec la première position de saillie, et qui interdit le désengagement du dispositif de verrouillage (15) lorsque celui-ci est engagé ; et
- une configuration de désengagement :
∘ dans laquelle passe le dispositif de verrouillage (15) par actionnement de l'organe de commande (60) à partir de la configuration de verrouillage,
∘ dans laquelle le pêne (26) est mobile entre d'une part une position intermédiaire, laquelle est définie entre la position escamotée et les positions de saillie, et d'autre part la position escamotée, et
∘ dans laquelle l'organe de rappel (34) met le dispositif de verrouillage (15) en configuration d'engagement lorsque le pêne (26) est amené en position escamotée, **caractérisé en ce que** le dispositif de verrouillage (15) comprend :
- un organe d'actionnement (28), qui est mobile par rapport au support (20, 21), et est configuré pour être soumis à un effort de rappel ou un couple de rappel par l'organe de rappel (34) et pour être actionné par l'organe de commande (60) ;
- une transmission mécanique (30), qui lie mécaniquement en position le pêne (26) et l'organe d'actionnement (28), et qui est configurée pour évoluer entre :
∘ une configuration réversible, adoptée en configuration d'engagement et en configuration de désengagement, dans laquelle la mobilité du pêne (26) est autorisée entre la position escamotée et la première position de saillie par réversibilité de la transmission mécanique (30), sous l'action d'un effort exercé sur le pêne (26), et
∘ une configuration irréversible, adoptée en configuration de verrouillage, dans laquelle la mobilité du pêne (26) est limitée à la deuxième position de saillie par irréversibilité de la transmission mécanique (30), en dépit de l'exercice d'un effort sur le pêne (26).

2. Dispositif de verrouillage (15) selon la revendication 1, **caractérisé en ce que** :
- le pêne (26) est mobile en coulissement le long d'un axe de pêne (X26) fixe par rapport au support (20, 21),
- l'organe d'actionnement (28) est mobile en rotation autour d'un axe principal (X13) fixe par rapport au support (20, 21) et perpendiculaire par rapport à l'axe de pêne (X26), la rotation pouvant être effectuée selon un sens direct (S1) et selon un sens indirect (S2), l'organe de rappel (34) appliquant un couple de rappel sur l'organe d'actionnement (28), par rapport au support (20, 21), en rotation dans le sens direct (S1), la transmission mécanique (30) liant mécaniquement le coulissement du pêne (26) à la rotation de l'organe d'actionnement (28) de sorte que l'organe d'actionnement (28) peut être orienté, par rapport au support (20, 21) et autour de l'axe principal (X13) :
∘ en configuration réversible, selon les orientations suivantes successives dans le sens direct (S1) :
▪ une orientation d'escamotage, qui correspond à la position escamotée du pêne (26),
▪ une orientation intermédiaire, qui correspond à la position intermédiaire du pêne (26), et
▪ une première orientation de saillie, qui correspond à la première position de saillie du pêne (26) ; et
∘ en configuration irréversible, selon une deuxième orientation de saillie successive à la première orientation de saillie dans le sens direct (S1), la deuxième orientation de saillie correspondant à la deuxième position de saillie du pêne (26) ;
- l'organe de commande (60) est actionnable en rotation par rapport au support (20, 21) autour de l'axe principal (X13) entre :
∘ une orientation de déblocage, pour mettre le dispositif de verrouillage (15) en configuration de désengagement à partir de la configuration de verrouillage, et
∘ une orientation de blocage, par rotation dans le sens direct (S1) depuis l'orientation de déblocage, pour mettre le dispositif de verrouillage (15) en configuration de verrouillage à partir de la configuration d'engagement.

3. Dispositif de verrouillage (15) selon la revendication 2, **caractérisé en ce que** l'organe de commande (60) comprend une butée radiale directe (70, 77) qui borne la rotation de l'organe d'actionnement (28) dans le sens indirect (S2) autour de l'axe principal (X13) par rapport à l'organe de commande (60), de sorte que, lorsque l'organe d'actionnement (28) est en butée contre la butée radiale directe (70, 77), l'organe d'actionnement (28) est :
- en orientation d'escamotage, alors que l'organe de commande (60) est en orientation de déblocage, et
- en deuxième orientation de saillie, alors que l'organe de commande (60) est en orientation de blocage.

4. Dispositif de verrouillage (15) selon l'une quelconque des revendications 2 ou 3, **caractérisé en ce que** l'organe de commande (60) comprend une première butée radiale indirecte (71, 80) qui borne la rotation de l'organe d'actionnement (28) dans le sens direct (S1) autour de l'axe principal (X13) par rapport à l'organe de commande (60), de sorte que :
- l'organe d'actionnement (28) est en première orientation de saillie lorsque l'organe d'actionnement (28) est en butée contre la première butée radiale indirecte (71, 80), alors que l'organe de commande (60) est en orientation de déblocage ; et
- si l'organe de commande (60) est mis en rotation dans le sens direct (S1) depuis l'orientation de déblocage jusqu'à l'orientation de blocage, une mise en rotation de l'organe d'actionnement (28) dans le sens direct (S1) par l'organe de rappel (34) est autorisée, l'organe d'actionnement (28) étant alors entraîné jusqu'à la deuxième orientation de saillie par l'organe de rappel (34), ce qui fait passer le dispositif de verrouillage (15) en configuration de verrouillage.

5. Dispositif de verrouillage (15) selon l'une quelconque des revendications 3 ou 4, **caractérisé en ce que** :
- l'organe de commande (60) comprend une deuxième butée radiale indirecte (82, 90) ; et
- le dispositif de verrouillage (15) comprend un organe mobile (42), monté sur l'organe d'actionnement (28) et configuré pour basculer entre :
∘ une configuration déclenchée, dans laquelle l'organe mobile (42) ne s'oppose pas à la rotation de l'organe de commande (60) par rapport à l'organe d'actionnement (28), et
∘ une configuration enclenchée, dans laquelle la deuxième butée radiale indirecte (82, 90) borne la rotation de l'organe d'actionnement (28) dans le sens direct (S1) autour de l'axe principal (X13) par rapport à l'organe de commande (60), par l'intermédiaire de l'organe mobile (42), de sorte que, si l'organe de commande (60) est entraîné en rotation depuis son orientation de blocage jusqu'à son orientation de déblocage, l'organe de commande (60) entraîne l'organe d'actionnement (28) en rotation dans le sens indirect (S2) par rapport au support (20, 21), par mise en butée de l'organe d'actionnement (28) contre la deuxième butée radiale indirecte (82, 90), depuis la deuxième orientation de saillie jusqu'à l'orientation intermédiaire, afin de faire passer le dispositif de verrouillage (15) de la configuration de verrouillage à la configuration de désengagement.

6. Dispositif de verrouillage (15) selon la revendication 5, **caractérisé en ce que** le support (20, 21) comprend une butée d'enclenchement (54, 58), qui est configurée pour faire basculer l'organe mobile (42) en configuration enclenchée, alors qu'il était en configuration déclenchée, lorsque l'organe d'actionnement (28) passe de la première orientation de saillie à la deuxième orientation de saillie.

7. Dispositif de verrouillage (15) selon l'une quelconque des revendications 5 ou 6, **caractérisé en ce que** :
- l'organe d'actionnement (28) comprend une partie primaire (29), qui est liée directement à la transmission mécanique (30), et une partie secondaire (40) sur laquelle l'organe de rappel (34) exerce le couple de rappel ;
- la partie secondaire (40) est configurée pour entrer en butée contre la deuxième butée radiale indirecte (82, 90) de l'organe de commande (60), lorsque l'organe mobile (42) est en configuration enclenchée ; et
- la partie primaire (29) est rotative par rapport à la partie secondaire (40) autour de l'axe principal (X13), entre :
∘ une orientation d'autorisation, dans laquelle l'organe mobile (42) est autorisé par la partie primaire (29) et par la partie secondaire (40) à adopter la configuration d'enclenchement et la configuration de déclenchement, et
∘ une orientation de basculement, dans laquelle la partie primaire (29) a effectué une rotation dans le sens indirect (S2) par rapport à l'orientation d'autorisation, de façon à maintenir l'organe mobile (42) en configuration de déclenchement, de sorte que, en configuration de désengagement, un entraînement du pêne (26) depuis la position intermédiaire jusqu'à la position escamotée fait passer la partie primaire (29) de l'orientation d'autorisation à l'orientation de basculement.

8. Dispositif de verrouillage (15) selon la revendication 7, **caractérisé en ce que** l'organe de rappel (34) est un ressort de torsion.

9. Dispositif de verrouillage (15) selon l'une quelconque des revendications précédentes, **caractérisé en ce que** le dispositif de verrouillage (15) comprend en outre un système de pilotage comprenant :
- un actionneur de commande (91) configuré pour actionner l'organe de commande (60) ;
- au moins un récepteur d'autorisations ; et
- un automate de pilotage de l'organe de commande (60) par l'intermédiaire de l'actionneur de commande (91), le système de pilotage étant configuré pour actionner l'organe de commande (60) de façon à :
o mettre le dispositif de verrouillage (15) en configuration de verrouillage, depuis la configuration d'engagement, lorsque le récepteur d'autorisations reçoit une autorisation de verrouillage ; et
∘ mettre le dispositif de verrouillage (15) en configuration de désengagement, depuis la configuration de verrouillage, lorsque le récepteur d'autorisations reçoit une autorisation de désengagement.

10. Dispositif de verrouillage (15) selon l'une quelconque des revendications précédentes, **caractérisé en ce que**, dans la configuration de verrouillage, le pêne (26) est bloqué dans la deuxième position de saillie, de sorte que ledit pêne (26) ne peut pas être mu de façon significative par l'exercice d'un effort sur ledit pêne (26).

11. Cycle (3), comprenant un dispositif de verrouillage (15) conforme à l'une quelconque des revendications précédentes, lequel est intégré à une partie du cycle (3), de préférence un cadre (14) ou une fourche avant (13) du cycle (3).

12. Cycle (3) selon la revendication 11, le dispositif de verrouillage (15) étant conforme à l'une quelconque des revendications 7 ou 8, **caractérisé en ce que** :
- le support (20, 21) comprend un bouchon (20) dans lequel sont logés l'organe de rappel (34) et la partie secondaire (40) ;
- le dispositif de verrouillage (15) comprend un sous-ensemble démontable comprenant le bouchon (20), l'organe de rappel (34) et la partie secondaire (40) ; et
- le sous-ensemble démontable peut être démonté du cycle (3) sans démonter la partie primaire (29) et sans démonter l'organe de commande (60).

13. Système (1) comprenant au moins un cycle (3) conforme à l'une quelconque des revendications 11 ou 12, ainsi qu'au moins une borne de stockage (5) dans laquelle le dispositif de verrouillage (15) du cycle (3) peut être engagé et de laquelle le dispositif de verrouillage (15) peut être désengagé.

14. Système (1) selon la revendication 13, **caractérisé en ce que** la borne de stockage (5) comprend :
- une rampe d'escamotage (98), qui est configurée pour, alors que le dispositif de verrouillage (15) est en configuration d'engagement, faire passer le pêne (26) depuis la première position de saillie jusqu'à la position escamotée à l'encontre de l'organe de rappel (34), sous l'action d'un engagement du dispositif de verrouillage (15) dans la borne de stockage (5), et
- une gâche (95), qui est configurée pour être atteinte par le pêne (26), alors qu'il a été mis en position escamotée à l'aide de la première rampe d'escamotage (98), le positionnement du pêne (26) au sein de la gâche (95) autorisant le pêne (26) à être mis en première position de saillie pour ainsi verrouiller le dispositif de verrouillage (15) à la borne de stockage (5).

## Patentansprüche

1. Verriegelungsvorrichtung (15) zum Verriegeln eines Fahrrads (3) an einem Abstellständer (5) des Fahrrads (3), wobei die Verriegelungsvorrichtung (15) mit dem Abstellständer in Eingriff gebracht werden kann und die Verriegelungsvorrichtung (15) von dem Abstellständer gelöst werden kann, wobei die Verriegelungsvorrichtung (15) eine Stütze (20, 21), die ausgebildet ist, um in einen Teil des Fahrrads (3) eingebaut zu werden, und mindestens einen Riegel (26) umfasst, der relativ zu der Stütze (20, 21) beweglich ist;
wobei die Verriegelungsvorrichtung (15) so konfiguriert ist, dass sie sich zwischen Folgenden bewegen kann:
- einer Eingriffskonfiguration, in der der Riegel (26) zwischen einer eingezogenen Position, die vorgesehen ist, um das Eingreifen und das Lösen der Verriegelungsvorrichtung (15) zu erlauben, und einer ersten vorstehenden Position, die vorgesehen ist, um das Lösen der Verriegelungsvorrichtung (15) zu verhindern, wenn diese in Eingriff ist, beweglich ist, wobei der Riegel (26) durch ein Rückstellelement (34) der Verriegelungsvorrichtung (15) in die erste vorstehende Position zurückgeführt wird, wenn sich die Verriegelungsvorrichtung (15) in der Eingriffskonfiguration befindet;
- einer Verriegelungskonfiguration:
∘ in die die Verriegelungsvorrichtung (15) durch Betätigung eines Steuerelements (60) der Verriegelungsvorrichtung (15) aus der Eingriffskonfiguration übergeht, und
∘ in der der Riegel (26) in einer zweiten vorstehenden Position gesperrt ist, die optional mit der ersten vorstehenden Position zusammengenommen werden kann, und die das Lösen der Verriegelungsvorrichtung (15) verhindert, wenn diese in Eingriff ist; und
- einer Lösekonfiguration:
∘ in die die Verriegelungsvorrichtung (15) durch Betätigung des Steuerelements (60) aus der Verriegelungskonfiguration übergeht,
∘ in der der Riegel (26) zwischen einerseits einer Zwischenposition, die zwischen der eingezogenen Position und den vorstehenden Positionen definiert ist, und andererseits der eingezogenen Position beweglich ist, und
∘ in der das Rückstellelement (34) die Verriegelungsvorrichtung (15) in die Eingriffskonfiguration bringt, wenn der Riegel (26) in die eingezogene Position geführt wird, **dadurch gekennzeichnet, dass** die Verriegelungsvorrichtung (15) umfasst:
- ein Betätigungselement (28), das relativ zu der Stütze (20, 21) beweglich ist und konfiguriert ist, um durch das Rückstellelement (34) einer Rückstellkraft oder einem Rückstellmoment unterworfen zu werden und um durch das Steuerelement (60) betätigt zu werden;
- ein mechanisches Getriebe (30), das den Riegel (26) und das Betätigungselement (28) mechanisch in Position verbindet, und das konfiguriert ist, um sich zwischen Folgenden zu bewegen:
∘ einer umkehrbaren Konfiguration, die in der Eingriffskonfiguration und in der Lösekonfiguration angenommen wird, in der die Beweglichkeit des Riegels (26) zwischen der eingezogenen Position und der ersten vorstehenden Position durch Umkehrbarkeit des mechanischen Getriebes (30) unter der Wirkung einer auf den Riegel (26) ausgeübten Kraft erlaubt wird, und
∘ einer nicht umkehrbaren Konfiguration, die in der Verriegelungskonfiguration angenommen wird, in der die Beweglichkeit des Riegels (26) trotz der Ausübung einer Kraft auf den Riegel (26) durch die Unumkehrbarkeit des mechanisches Getriebes (30) auf die zweite vorstehende Position begrenzt ist.

2. Verriegelungsvorrichtung (15) nach Anspruch 1, **dadurch gekennzeichnet, dass**:
- der Riegel (26) entlang einer relativ zu der Stütze (20, 21) festen Riegelachse (X26) gleitend beweglich ist,
- das Betätigungselement (28) um eine Hauptachse (X13) herum drehbeweglich ist, die relativ zu der Stütze (20, 21) fest und relativ zu der Riegelachse (X26) senkrecht ist, wobei die Drehung gemäß einer direkten Richtung (S1) und in einer indirekten Richtung (S2) ausgeführt werden kann, wobei das Rückstellelement (34) ein Rückstellmoment auf das Betätigungselement (28) relativ zu der Stütze (20, 21) bei einem Drehen in der direkten Richtung (S1) ausübt, die mechanische Übertragung (30) die Verschiebung des Riegels (26) mechanisch mit der Drehung des Betätigungselements (28) verbindet, so dass das Betätigungselement (28) relativ zu der Stütze (20, 21) und um die Hauptachse (X13) herum ausgerichtet werden kann:
∘ in einer umkehrbaren Konfiguration, gemäß den folgenden aufeinanderfolgenden Ausrichtungen in der direkten Richtung (S1):
▪ eine Einzugsausrichtung, die der eingezogenen Position des Riegels (26) entspricht,
▪ eine Zwischenausrichtung, die der Zwischenposition des Riegels (26) entspricht, und
▪ eine erste vorstehende Ausrichtung, die der ersten vorstehenden Position des Riegels (26) entspricht; und
∘ in einer nicht umkehrbaren Konfiguration gemäß einer zweiten vorstehenden Ausrichtung, die auf die erste vorstehende Ausrichtung in der direkten Richtung (S1) folgt, wobei die zweite vorstehende Ausrichtung der zweiten vorstehenden Position des Riegels (26) entspricht;
- wobei das Steuerelement (60) relativ zu der Stütze (20, 21) um die Hauptachse (X13) herum drehbar zwischen Folgenden betätigt werden kann:
∘ einer Entsperrausrichtung, um die Verriegelungsvorrichtung (15) in eine Lösekonfiguration aus der Verriegelungskonfiguration zu bringen, und
∘ eine Sperrausrichtung, durch Drehung in der direkten Richtung (S1) aus der Entsperrausrichtung, um die Verriegelungsvorrichtung (15) aus der Eingriffskonfiguration in die Verriegelungskonfiguration zu bringen.

3. Verriegelungsvorrichtung (15) nach Anspruch 2, **dadurch gekennzeichnet, dass** das Steuerelement (60) einen direkten radialen Anschlag (70, 77) umfasst, der die Drehung des Betätigungselements (28) in der indirekten Richtung (S2) um die Hauptachse (X13) herum relativ zu dem Steuerelement (60) begrenzt, so dass, wenn das Betätigungselement (28) in Anlage an dem direkten radialen Anschlag (70, 77) ist, das Betätigungselement (28) folgendermaßen angeordnet ist:
- in Einzugsausrichtung, während das Steuerelement (60) in Entsperrausrichtung ist, und
- in einer zweiten vorstehenden Ausrichtung, während sich das Steuerelement (60) in einer Sperrausrichtung befindet.

4. Verriegelungsvorrichtung (15) nach einem der Ansprüche 2 oder 3, **dadurch gekennzeichnet, dass** das Steuerelement (60) einen ersten indirekten radialen Anschlag (71, 80) umfasst, der die Drehung des Betätigungselements (28) in der direkten Richtung (S1) um die Hauptachse (X13) herum relativ zu dem Steuerelement (60) begrenzt, sodass:
- das Betätigungselement (28) in einer ersten vorstehenden Ausrichtung ist, wenn das Betätigungselement (28) in Anlage mit dem ersten indirekten radialen Anschlag (71, 80) ist, während sich das Steuerelement (60) in einer Entsperrausrichtung befindet; und
- wenn das Steuerelement (60) in der direkten Richtung (S1) von der Entsperrausrichtung bis zu der Sperrausrichtung gedreht wird, eine Drehung des Betätigungselements (28) in der direkten Richtung (S1) durch das Rückstellelement (34) erlaubt wird, wodurch das Betätigungselement (28) durch das Rückstellelement (34) bis zu der zweiten vorstehenden Ausrichtung getrieben wird, wodurch die Verriegelungsvorrichtung (15) in die Verriegelungskonfiguration übergeht.

5. Verriegelungsvorrichtung (15) nach einem der Ansprüche 3 oder 4, **dadurch gekennzeichnet, dass**:
- das Steuerelement (60) einen zweiten indirekten radialen Anschlag (82, 90) umfasst; und
- die Verriegelungsvorrichtung (15) ein bewegliches Element (42) umfasst, das an dem Betätigungselement (28) angebracht ist und konfiguriert ist, um zwischen Folgenden hin- und herzuschalten:
∘ einer freigegebenen Konfiguration, in der das bewegliche Element (42) der Drehung des Steuerelements (60) relativ zu dem Betätigungselement (28) nicht entgegenwirkt, und
∘ einer eingerückten Konfiguration, in der der zweite indirekte radiale Anschlag (82, 90) die Drehung des Betätigungselements (28) in der direkten Richtung (S1) um die Hauptachse (X13) herum relativ zum Steuerelement (60) über das bewegliche Element (42) begrenzt, so dass, wenn das Steuerelement (60) aus seiner Sperrausrichtung bis zu seiner Entsperrausrichtung gedreht wird, das Steuerelement (60) das Betätigungselement (28) in der indirekten Richtung (S2) relativ zu der Stütze (20, 21) dreht, durch Anstoßen des Betätigungselements (28) gegen den zweiten indirekten Radialanschlag (82, 90) von der zweiten vorstehenden Ausrichtung bis zu der Zwischenausrichtung, um die Verriegelungsvorrichtung (15) von der Verriegelungskonfiguration in die Lösekonfiguration übergehen zu lassen.

6. Verriegelungsvorrichtung (15) nach Anspruch 5, **dadurch gekennzeichnet, dass** die Stütze (20, 21) einen Einrückanschlag (54, 58) umfasst, der konfiguriert ist, um das bewegliche Element (42) in die eingerückte Konfiguration hin- und herzuschalten, während es sich in der freigegebenen Konfiguration befindet, wenn das Betätigungselement (28) von der ersten vorstehenden Ausrichtung zur zweiten vorstehenden Ausrichtung übergeht.

7. Verriegelungsvorrichtung (15) nach einem der Ansprüche 5 oder 6, **dadurch gekennzeichnet, dass**:
- das Betätigungselement (28) ein Primärteil (29), das direkt mit dem mechanischen Getriebe (30) verbunden ist, und ein Sekundärteil (40) umfasst, auf das das Rückstellelement (34) das Rückstellmoment ausübt;
- das Sekundärteil (40) so konfiguriert ist, dass es an dem zweiten indirekten radialen Anschlag (82, 90) des Betätigungselements (60) anliegt, wenn sich das bewegliche Element (42) in der freigegebenen Konfiguration befindet; und
- das Primärteil (29) relativ zu dem Sekundärteil (40) um die Hauptachse (X13) herum zwischen Folgenden drehbar ist:
∘ einer Autorisierungsausrichtung, in der es dem beweglichen Element (42) durch das Primärteil (29) und durch das Sekundärteil (40) erlaubt wird, die Freigabekonfiguration und die Ausrückkonfiguration anzunehmen, und
∘ einer Kippausrichtung, in der sich das Primärteil (29) in der indirekten Richtung (S2) relativ zu der Autorisierungsausrichtung gedreht hat, um das bewegliche Element (42) in der Ausrückkonfiguration zu halten, so dass in der Ausrückkonfiguration ein Antrieb des Riegels (26) aus der Zwischenposition bis zu der eingezogenen Position das Primärteil (29) aus der Autorisierungsausrichtung in die Kippausrichtung übergeht.

8. Verriegelungsvorrichtung (15) nach Anspruch 7, **dadurch gekennzeichnet, dass** das Rückstellelement (34) eine Torsionsfeder ist.

9. Verriegelungsvorrichtung (15) nach einem der vorhergehenden Ansprüche, **dadurch gekennzeichnet, dass** die Verriegelungsvorrichtung (15) ferner ein Steuersystem umfasst, umfassend:
- einen Steueraktuator (91), der konfiguriert ist, um das Steuerelement (60) zu betätigen;
- mindestens einen Autorisierungsempfänger; und
- eine Steuerautomatik des Steuerelements (60) mittels des Steueraktuators (91), wobei das Steuersystem konfiguriert ist, um das Steuerelement (60) für folgende Zwecke zu betätigen:
∘ Bringen der Verriegelungsvorrichtung (15) von der Eingriffskonfiguration in die Verriegelungskonfiguration, wenn der Autorisierungsempfänger eine Verriegelungsautorisierung empfängt; und
∘ Bringen der Verriegelungsvorrichtung (15) von der Verriegelungskonfiguration in die Lösekonfiguration, wenn der Autorisierungsempfänger eine Löseautorisierung empfängt.

10. Verriegelungsvorrichtung (15) nach einem der vorhergehenden Ansprüche, **dadurch gekennzeichnet, dass** in der Verriegelungskonfiguration der Riegel (26) in der zweiten vorstehenden Position gesperrt ist, so dass der Riegel (26) durch das Ausüben einer Kraft auf den Riegel (26) nicht wesentlich bewegt werden kann.

11. Fahrrad (3), umfassend eine Verriegelungsvorrichtung (15) nach einem der vorhergehenden Ansprüche, die in ein Teil des Fahrrads (3), vorzugsweise einen Rahmen (14) oder eine Vorderradgabel (13) des Fahrrads (3), integriert ist.

12. Fahrrad (3) nach Anspruch 11, wobei die Verriegelungsvorrichtung (15) mit einem der Ansprüche 7 oder 8 übereinstimmt, **dadurch gekennzeichnet, dass**:
- die Stütze (20, 21) eine Kappe (20) umfasst, in der das Rückstellelement (34) und das Sekundärteil (40) untergebracht sind;
- die Verriegelungsvorrichtung (15) eine demontierbare Untereinheit umfasst, die die Kappe (20), das Rückstellelement (34) und das Sekundärteil (40) umfasst; und
- die demontierbare Untereinheit von dem Fahrrad (3) demontiert werden kann, ohne das Primärteil (29) zu demontieren und ohne das Steuerelement (60) zu demontieren.

13. System (1), umfassend mindestens ein Fahrrad (3), das mit einem der Ansprüche 11 oder 12 übereinstimmt, sowie mindestens einen Abstellständer (5), in den die Verriegelungsvorrichtung (15) des Fahrrads (3) eingreifen kann und aus dem die Verriegelungsvorrichtung (15) gelöst werden kann.

14. System (1) nach Anspruch 13, **dadurch gekennzeichnet, dass** der Abstellständer (5) umfasst:
- eine Einzugsrampe (98), die so konfiguriert ist, dass sie, während sich die Verriegelungsvorrichtung (15) in der Eingriffskonfiguration befindet, den Riegel (26) unter der Wirkung eines Eingriffs der Verriegelungsvorrichtung (15) in den Abstellständer (5) von der ersten vorstehenden Position bis zu der eingezogenen Position gegen das Rückstellelement (34) übergehen lässt, und
- ein Schließblech (95), das so konfiguriert ist, dass es von dem Riegel (26) erreicht werden kann, während er mit Hilfe der ersten Einzugsrampe (98) in die eingezogene Position gebracht worden ist, wobei durch die Positionierung des Riegels (26) innerhalb des Schließblechs (95) der Riegel (26) in die erste vorstehende Position gebracht werden kann, um so die Verriegelungsvorrichtung (15) an dem Abstellständer (5) zu verriegeln.

## Claims

1. Locking device (15) for locking a cycle (3) to a storage terminal (5) of the cycle (3), it being possible for the locking device (15) to be engaged in the storage terminal and for the locking device (15) to be disengaged from the storage terminal, the locking device (15) comprising a support (20, 21), which is designed to be integrated with a part of the cycle (3), and at least one slide bolt (26), which is movable relative to the support (20, 21);
the locking device (15) being designed to move between:
- an engaged configuration in which the slide bolt (26) is movable between a retracted position, which is intended to allow the locking device (15) to engage and disengage, and a first protrusion position, which is intended to prevent the locking device (15) from disengaging when said device is engaged, the slide bolt (26) being returned to the first protrusion position by a return member (34) of the locking device (15) when the locking device (15) is in the engaged configuration;
- a locking configuration:
∘ into which the locking device (15) moves from the engaged configuration, by actuating a control member (60) of the locking device (15), and
∘ in which the slide bolt (26) is blocked in a second protrusion position, which can optionally coincide with the first protrusion position, and which stops the locking device (15) from disengaging when said device is engaged; and
- a disengaged configuration:
∘ into which the locking device (15) moves from the locking configuration, by actuating the control member (60),
∘ in which the slide bolt (26) is movable between an intermediate position, which is defined between the retracted position and the protrusion positions, and the retracted position, and
∘ in which the return member (34) places the locking device (15) in the engaged configuration when the slide bolt (26) is brought into the retracted position, **characterized in that** the locking device (15) comprises:
- an actuating member (28), which is movable relative to the support (20, 21), and is designed to be subjected to a return force or a return torque by the return member (34) and to be actuated by the control member (60);
- a mechanical transmission (30), which mechanically links the slide bolt (26) and the actuating member (28) in position, and which is designed to move between:
∘ a reversible configuration which is adopted in the engaged configuration and in the disengaged configuration and in which the slide bolt (26) is allowed to move between the retracted position and the first protrusion position by reversibility of the mechanical transmission (30), under the action of a force exerted on the slide bolt (26), and
∘ an irreversible configuration which is adopted in the locking configuration and in which the movability of the slide bolt (26) is limited to the second projection position by irreversibility of the mechanical transmission (30), despite a force being exerted on the bolt (26).

2. Locking device (15) according to claim 1, **characterized in that**:
- the slide bolt (26) can slide along a slide bolt axis (X26) that is fixed relative to the support (20, 21),
- the actuating member (28) can rotate about a main axis (X13) that is fixed relative to the support (20, 21) and perpendicular relative to the slide bolt axis (X26), it being possible for the rotation to be carried out in a forward direction (S1) and in a reverse direction (S2), the return member (34) applying a return torque to the actuating member (28), relative to the support (20, 21), for rotation in the forward direction (S1), the mechanical transmission (30) mechanically linking the sliding of the slide bolt (26) to the rotation of the actuating member (28) such that the actuating member (28) can be oriented, relative to the support (20, 21) and about the main axis (X13):
∘ in the reversible configuration, in the following successive orientations in the forward direction (S1):
▪ a retraction orientation, which corresponds to the retracted position of the slide bolt (26),
▪ an intermediate orientation, which corresponds to the intermediate position of the slide bolt (26), and
▪ a first projection orientation, which corresponds to the first projection position of the slide bolt (26); and
∘ in the irreversible configuration, in a second projection orientation following the first projection orientation in the forward direction (S1), the second projection orientation corresponding to the second projection position of the slide bolt (26);
- the control member (60) can be actuated to rotate relative to the support (20, 21) about the main axis (X13) between:
∘ an unblocking orientation, to put the locking device (15) into the disengaged configuration from the locking configuration, and
∘ a blocking orientation, by rotation in the forward direction (S1) from the unblocking orientation, to put the locking device (15) into the locking configuration from the engaged configuration.

3. Locking device (15) according to claim 2, **characterized in that** the control member (60) comprises a forward radial stop (70, 77) which limits the rotation of the actuating member (28) in the reverse direction (S2) about the main axis (X13) relative to the control member (60) such that, when the actuating member (28) is in abutment against the forward radial stop (70, 77), the actuating member (28) is:
- in the retraction orientation while the control member (60) is in the unblocking orientation, and
- in the second projection orientation while the control member (60) is in the blocking orientation.

4. Locking device (15) according to any one of claim 2 or claim 3, **characterized in that** the control member (60) comprises a first reverse radial stop (71, 80) which limits the rotation of the actuating member (28) in the forward direction (S1) about the main axis (X13) relative to the control member (60) such that:
- the actuating member (28) is in the first projection orientation when the actuating member (28) is in abutment against the first reverse radial stop (71, 80), while the control member (60) is in the unblocking orientation; and
- if the control member (60) is rotated in the forward direction (S1) from the unblocking orientation to the blocking orientation, rotation of the actuating member (28) in the forward direction (S1) by the return member (34) is allowed, the actuating member (28) then being moved to the second projection orientation by the return member (34), moving the locking device (15) to the locking configuration.

5. Locking device (15) according to any one of claim 3 or claim 4, **characterized in that**:
- the control member (60) comprises a second reverse radial stop (82, 90); and
- the locking device (15) comprises a movable member (42), which is mounted on the actuating member (28) and designed to tilt between:
∘ a release configuration in which the movable member (42) does not impede the rotation of the control member (60) relative to the actuating member (28), and
∘ a latched configuration in which the second reverse radial stop (82, 90) limits the rotation of the actuating member (28) in the forward direction (S1) about the main axis (X13) relative to the control member (60), via the movable member (42), such that if the control member (60) is rotated from its blocking orientation to its unblocking orientation, the control member (60) rotates the actuating member (28) in the reverse direction (S2) relative to the support (20, 21) by bringing the actuating member (28) into abutment against the second reverse radial stop (82, 90), from the second projection orientation to the intermediate orientation, in order to move the locking device (15) from the locking configuration to the disengaged configuration.

6. Locking device (15) according to claim 5, **characterized in that** the support (20, 21) comprises a latching stop (54, 58) which is designed to tilt the movable member (42) from the release configuration into the latched configuration when the actuating member (28) moves from the first projection orientation to the second projection orientation.

7. Locking device (15) according to any one of claim 5 or claim 6, **characterized in that**:
- the actuating member (28) comprises a primary part (29) which is linked directly to the mechanical transmission (30), and a secondary part (40) on which the return member (34) exerts the return torque;
- the secondary part (40) is designed to come into abutment against the second reverse radial abutment (82, 90) of the control member (60) when the movable member (42) is in the latched configuration; and
- the primary part (29) is rotatable relative to the secondary part (40) about the main axis (X13), between:
∘ an authorization orientation in which the movable member (42) is authorized by the primary part (29) and by the secondary part (40) to adopt the latching configuration and the release configuration, and
∘ a tilting orientation in which the primary part (29) has rotated in the reverse direction (S2) relative to the authorization orientation so as to retain the movable member (42) in the release configuration such that, in the disengaged configuration, moving the slide bolt (26) from the intermediate position to the retracted position moves the primary part (29) from the authorization orientation to the tilting orientation.

8. Locking device (15) according to claim 7, **characterized in that** the return member (34) is a torsion spring.

9. Locking device (15) according to any one of the preceding claims, **characterized in that** the locking device (15) further comprises a control system comprising:
- a control actuator (91) designed to actuate the control member (60);
- at least one authorization receiver; and
- a controller for controlling the control member (60) via the control actuator (91), the control system being designed to actuate the control member (60) so as to:
∘ put the locking device (15) into the locking configuration, from the engaged configuration, when the authorization receiver receives a locking authorization; and
∘ put the locking device (15) into the disengaged configuration, from the locking configuration, when the authorization receiver receives a disengaging authorization.

10. Locking device (15) according to any one of the preceding claims, **characterized in that**, in the locking configuration, the slide bolt (26) is blocked in the second protrusion position such that said slide bolt (26) cannot not be moved significantly by exerting a force on said slide bolt (26).

11. Cycle (3), comprising a locking device (15) according to any one of the preceding claims, which device is integrated in a part of the cycle (3), preferably a frame (14) or a front fork (13) of the cycle (3).

12. Cycle (3) according to claim 11, the locking device (15) according to any one of claim 7 or claim 8, **characterized in that**:
- the support (20, 21) comprises a cap (20) in which the return member (34) and the secondary part (40) are housed;
- the locking device (15) comprises a removable sub-assembly comprising the cap (20), the return member (34) and the secondary part (40); and
- the removable sub-assembly can be removed from the cycle (3) without removing the primary part (29) and without removing the control member (60).

13. System (1) comprising at least one cycle (3) according to any one of claim 11 or claim 12, as well as at least one storage terminal (5) in which the locking device (15) of the cycle (3) can be engaged and from which the locking device (15) can be disengaged.

14. System (1) according to claim 13, **characterized in that** the storage terminal (5) comprises:
- a retraction ramp (98), which is designed, while the locking device (15) is in the engaged configuration, to move the slide bolt (26) from the first protrusion position to the retracted position against the return member (34), under the action of the locking device (15) engaging in the storage terminal (5), and
- a strike plate (95), which is designed to be reached by the slide bolt (26) which was placed in the retracted position using the first retraction ramp (98), the positioning of the slide bolt (26) within the strike plate (95) allowing the slide bolt (26) to be placed in the first protrusion position to thus lock the locking device (15) to the storage terminal (5).
